# EUROPEAN PATENT APPLICATION

(11) **EP 4 064 751 A1**
(43) Date of publication of application: **28.09.2022**
(21) Application number: 19953490.0
(22) Date of filing: 22.11.2019
(51) Int. Cl.: H04W 24/10

(54) **METHOD FOR REPORTING POSITION INFORMATION OF USER EQUIPMENT, USER EQUIPMENT AND NETWORK EQUIPMENT**

(71) Applicant: Huawei Technologies Co., Ltd., Shenzhen, Guangdong 518129, (CN)
(72) Inventor: YU, Yingjie, Shenzhen, Guangdong 518129 (CN); HUANG, Su, Shenzhen, Guangdong 518129 (CN); WANG, Yi, Shenzhen, Guangdong 518129 (CN)
(74) Representative: Gill Jennings & Every LLP
(86) International application number: PCT/CN2019/120439
(87) International publication number: WO 2021/097857

(57) **Abstract**

This application discloses a user equipment location information reporting method, user equipment, and a network device. Specifically, when user equipment moves, the user equipment may report, based on an indication of a location management device (such as an LMF or an LMC), a result of measuring a plurality of received positioning reference signals by the user equipment. The location management device (such as the LMF or the LMC) may determine a location of the user equipment based on the measurement result of the plurality of positioning reference signals that is reported by the UE. According to the location information reporting method provided in this application, a problem of excessive power consumption and a waste of link resources that are caused by a fact that the user equipment in an idle state/inactive state needs to periodically enter a connected state to report the measurement result of the reference signals can be resolved.

## Description

### TECHNICAL FIELD

This application relates to the field of communication technologies, and in particular, to a user equipment (user equipment, UE) location information reporting method, user equipment, and a network device.

### BACKGROUND

With rapid development of communication technologies, to provide a better communication service for a user, downlink high-accuracy positioning has become an important research subject of 5G technologies. For example, in an enhanced mobile broadband (enhanced mobile broadband, eMBB) scenario, a requirement for positioning accuracy is usually that an indoor positioning accuracy error should be less than 1 meter and an outdoor positioning accuracy error should be less than 10 meters.

In conventional downlink positioning, a location is determined by analyzing a result of measuring a reference signal by user equipment UE. For example, the reference signal may be a positioning reference signal (positioning reference signal, PRS). Specifically, the UE may periodically report a measurement result of a reference signal to a location management device.

However, in a conventional technology, the UE only in a connected (connected) state can report the measurement result to the location management device. For the UE in an idle (idle) state or an inactive (inactive) state, the user equipment UE needs to periodically enter the connected state from the idle state or the inactive state, to report the measurement result of the reference signal to the location management device. However, when the UE enters the connected state, power consumption increases.

In addition, the UE enters the connected state, and a network device needs to allocate a link resource to the UE. As a result, a waste of link resources may be further caused by using a conventional downlink positioning method.

### SUMMARY

This application provides a UE location information reporting method, user equipment, and a network device, to resolve a problem of excessive power consumption and a waste of link resources that are caused by a fact that UE in an idle state or an inactive state reports a measurement result of a reference signal.

To achieve the foregoing objective, the following technical solutions are used in embodiments of this application.

According to a first aspect, a user equipment location information reporting method is provided. The method includes: User equipment receives a first message, where the first message includes a motion trigger condition, and the motion trigger condition is used to trigger the user equipment to report a measurement result of a positioning reference signal based on motion. The user equipment determines that the user equipment meets the motion trigger condition. The user equipment reports the measurement result of the positioning reference signal.

In the technical solution provided in the first aspect, when the UE moves, the UE may report, based on the received motion trigger condition, a measurement result obtained by the UE by measuring a plurality of positioning reference signals. In this way, a location management device (such as an LMF or an LMC) may determine a location of the UE based on the measurement result reported by the UE. In this manner, a problem of excessive power consumption and a waste of link resources that are caused by a fact that the UE in an idle state or an inactive state needs to periodically enter a connected state to report the measurement result of the reference signals can be resolved.

In a possible implementation, that the user equipment determines that the user equipment meets the motion trigger condition includes: The user equipment determines that a change value of a preset parameter of the user equipment is greater than a preset threshold, where the preset parameter includes at least one of a location parameter of the user equipment, a motion parameter of the user equipment, or a received signal parameter of the user equipment. The user equipment determines, by analyzing the preset parameter, whether the motion trigger condition is met, so that reporting of the measurement result of the positioning reference signal is triggered when the user equipment moves. It may be understood as that a change value of the location parameter of the user equipment, the motion parameter of the user equipment, or the received signal parameter of the user equipment is greater than the preset threshold is caused by motion of the user equipment.

In a possible implementation, the first message further includes measurement manner indication information, the measurement manner indication information is used to indicate a measurement manner of the preset parameter, and the measurement manner includes one or more of sensor measurement, satellite measurement, or signal receiving apparatus measurement; and the method further includes: The user equipment obtains the preset parameter through measurement in the measurement manner. The user equipment may obtain the preset parameter through measurement based on the received measurement manner.

In a possible implementation, when the user equipment meets the motion trigger condition, the user equipment is in the idle state or the inactive state. The UE location information reporting method provided in this application is applicable to the UE in the idle state or the inactive state, and a problem of excessive power consumption and a waste of link resources that are caused by a fact that the UE in the idle state or the inactive state needs to periodically enter the connected state to report the measurement result of the reference signals can be resolved.

In a possible implementation, that the user equipment reports the measurement result of the positioning reference signal includes: The user equipment in the idle state or the inactive state reports the measurement result of the positioning reference signal to the location management device. The UE may report the measurement result of the positioning reference signal in either the idle state or the inactive state based on the motion. The problem of excessive power consumption and a waste of link resources that are caused by the fact that the UE in the idle state or the inactive state periodically enters the connected state to report the measurement result of the reference signals can be resolved.

In a possible implementation, before that the user equipment reports the measurement result of the positioning reference signal, the method further includes: The user equipment enters the connected state from the idle state or the inactive state. That the user equipment reports the measurement result of the positioning reference signal includes: The user equipment in the connected state reports the measurement result of the positioning reference signal to the location management device. The UE location information reporting method provided in this application is also applicable to a case in which the UE in the connected state reports the measurement result of the positioning reference signal based on the motion.

In a possible implementation, the user equipment is always in the connected state. That the user equipment reports the measurement result of the positioning reference signal includes: The user equipment in the connected state reports the measurement result of the positioning reference signal to the location management device. The UE location information reporting method provided in this application is also applicable to a case in which the UE in the connected state reports the measurement result of the positioning reference signal based on the motion.

In a possible implementation, the first message further includes measurement periodicity indication information, and the measurement periodicity indication information is used to indicate a measurement periodicity of the preset parameter. The method further includes: The user equipment obtains the preset parameter through measurement based on the measurement periodicity. The user equipment may obtain the preset parameter through measurement based on the received measurement periodicity.

In a possible implementation, the measurement result of the positioning reference signal includes a measurement result of a positioning reference signal that is obtained after the user equipment meets the motion trigger condition. The UE may report the measurement result of the positioning reference signal that is obtained by the UE through measurement based on the motion of the UE.

In a possible implementation, the measurement result of the positioning reference signal further includes a measurement result of a positioning reference signal that is obtained before the user equipment meets the motion trigger condition. The UE may further report the measurement result of the positioning reference signal that is obtained by the UE in the connected state through measurement.

In a possible implementation, the measurement result of the positioning reference signal includes one or more of the following information: reference signal received power RSRP, reference signal received quality RSRQ, a reference signal time difference RSTD, narrowband reference signal received power NRSRP, or narrowband reference signal received quality NRSRQ. Specific content in the measurement result that is of the positioning reference signal used to locate the UE and that is reported by the UE is not limited in this application. For example, the specific content may be at least one of the RSRP, the RSRQ, the RSTD, the NRSRP, the NRSRQ, or the like.

In a possible implementation, the location management device includes the location management network element LMF or the location management component LMC. A structure and the like of the location management device used to manage a UE reporting mechanism and locate the UE are not limited in this embodiment of this application. For example, the location management device may be either the LMF or the LMC.

In a possible implementation, before that the user equipment receives a first message, the method further includes: The user equipment sends capability information of the user equipment to the location management device. The user equipment receives assistance information from the location management device, where the capability information of the user equipment is used to indicate at least a locating mode type supported by the user equipment and/or a positioning reference signal measurement capability. The UE location information reporting method provided in this application may be implemented based on several information types in a conventional LPP protocol.

According to a second aspect, a user equipment location information reporting method is provided. The method includes: A location management device sends a first message to user equipment, where the first message includes a motion trigger condition, and the motion trigger condition is used to trigger the user equipment to report a measurement result of a positioning reference signal based on motion. The location management device receives the measurement result of the positioning reference signal from the user equipment, where the user equipment reports the measurement result of the positioning reference signal to the location management device when determining that the motion trigger condition is met.

In the technical solution provided in the second aspect, the location management device may indicate the UE to report, based on the received motion trigger condition when the UE moves, a measurement result obtained by the UE by measuring a plurality of positioning reference signals. The location management device may determine a location of the UE based on the measurement result reported by the UE. In this manner, a problem of excessive power consumption and a waste of link resources that are caused by a fact that the UE in an idle state or an inactive state periodically enters a connected state to report the measurement result of the reference signals can be resolved.

In a possible implementation, the motion trigger condition includes that a change value of a preset parameter of the user equipment is greater than a preset threshold; and the preset parameter includes at least one of a location parameter of the user equipment, a motion parameter of the user equipment, or a received signal parameter of the user equipment. The location management device may indicate the UE to determine, based on the preset parameter, whether the UE meets the motion trigger condition, so that reporting of the measurement result of the positioning reference signal is triggered when the UE moves. It may be understood as that a change value of the location parameter of the UE, the motion parameter of the UE, or the received signal parameter of the UE is greater than the preset threshold is caused by motion of the UE.

In a possible implementation, the first message further includes measurement manner indication information, the measurement manner indication information is used to indicate a measurement manner of the preset parameter, and the measurement manner includes one or more of sensor measurement, satellite measurement, or signal receiving apparatus measurement. The location management device may indicate a measurement manner used by the UE to measure the preset parameter, so that the UE may obtain the preset parameter through measurement based on the measurement manner.

In a possible implementation, the first message further includes measurement periodicity indication information, and the measurement periodicity indication information is used to indicate a measurement periodicity of the preset parameter. The location management device may indicate a measurement periodicity used by the UE to measure the preset parameter, so that the UE may obtain the preset parameter based on the measurement periodicity.

In a possible implementation, the location management device includes either a location management network element LMF or a location management component LMC. A structure and the like of the location management device used to manage a UE reporting mechanism and locate the UE are not limited in this embodiment of this application. For example, the location management device may be either the LMF or the LMC.

In a possible implementation, before that a location management device sends a first message to user equipment, the method further includes: A location management device receives a location service request from an access and mobility management device, where the location service request is used to request to locate the user equipment. After that the location management device receives the measurement result of the positioning reference signal from the user equipment, the method further includes: The location management device sends a location service response to the access and mobility management device, where the location service response includes a result of locating the user equipment by the location management device. In this application, the location management device may indicate, based on the location service request initiated by the access and mobility management device, the UE to report the measurement result of the positioning reference signal based on the motion of the UE. Locating scenarios for use are wider and more flexible.

In a possible implementation, the location management device autonomously sends the first message to the user equipment. In this application, the location management device may autonomously indicate the UE to report the measurement result of the positioning reference signal based on the motion of the UE. Locating scenarios for use are wider and more flexible.

In a possible implementation, before that a location management device sends a first message to user equipment, the method further includes: The location management device receives capability information of the user equipment from the user equipment. The location management device sends assistance information to the user equipment, where the capability information of the user equipment is used to indicate at least a locating mode type supported by the user equipment and/or a positioning reference signal measurement capability. The UE location information reporting method provided in this application may be implemented based on several information types in a conventional LPP protocol.

According to a third aspect, user equipment is provided. The user equipment includes: a receiving unit, configured to receive a first message, where the first message includes a motion trigger condition, and the motion trigger condition is used to trigger the user equipment to report a measurement result of a positioning reference signal based on motion; an analysis unit, configured to determine that the user equipment meets the motion trigger condition; and a sending unit, configured to report the measurement result of the positioning reference signal.

In the technical solution provided in the second aspect, when the UE moves, the UE may report, based on the received motion trigger condition, a measurement result obtained by the UE by measuring a plurality of positioning reference signals. In this way, a location management device (such as an LMF or an LMC) may determine a location of the UE based on the measurement result reported by the UE. In this manner, a problem of excessive power consumption and a waste of link resources that are caused by a fact that the UE in an idle state or an inactive state needs to periodically enter a connected state to report the measurement result of the reference signals can be resolved.

In a possible implementation, that the analysis unit determines that the user equipment meets the motion trigger condition includes: The analysis unit determines that a change value of a preset parameter of the user equipment is greater than a preset threshold, where the preset parameter includes at least one of a location parameter of the user equipment, a motion parameter of the user equipment, or a received signal parameter of the user equipment. The user equipment determines, by analyzing the preset parameter, whether the motion trigger condition is met, so that reporting of the measurement result of the positioning reference signal is triggered when the user equipment moves. It may be understood as that a change value of the location parameter of the user equipment, the motion parameter of the user equipment, or the received signal parameter of the user equipment is greater than the preset threshold is caused by motion of the user equipment.

In a possible implementation, the first message further includes measurement manner indication information, the measurement manner indication information is used to indicate a measurement manner of the preset parameter, and the measurement manner includes one or more of sensor measurement, satellite measurement, or signal receiving apparatus measurement; and the method further includes: The user equipment obtains the preset parameter through measurement in the measurement manner. The user equipment may obtain the preset parameter through measurement based on the received measurement manner.

In a possible implementation, when the user equipment meets the motion trigger condition, the user equipment is in the idle state or the inactive state. The UE location information reporting method provided in this application is applicable to the UE in the idle state or the inactive state, and a problem of excessive power consumption and a waste of link resources that are caused by a fact that the UE in the idle state or the inactive state needs to periodically enter the connected state to report the measurement result of the reference signals can be resolved.

In a possible implementation, that the sending unit reports the measurement result of the positioning reference signal includes: The sending unit in the idle state or the inactive state reports the measurement result of the positioning reference signal to the location management device. The UE may report the measurement result of the positioning reference signal in either the idle state or the inactive state based on the motion. The problem of excessive power consumption and a waste of link resources that are caused by the fact that the UE in the idle state or the inactive state periodically enters the connected state to report the measurement result of the reference signals can be resolved.

In a possible implementation, the sending unit is further configured to: before the sending unit reports the measurement result of the positioning reference signal, enable the user equipment to enter the connected state from the idle state or the inactive state. That the sending unit reports the measurement result of the positioning reference signal includes: The sending unit reports the measurement result of the positioning reference signal to the location management device when the user equipment is in the connected state. The UE location information reporting method provided in this application is also applicable to a case in which the UE in the connected state reports the measurement result of the positioning reference signal based on the motion.

In a possible implementation, the user equipment is always in the connected state. That the sending unit reports the measurement result of the positioning reference signal includes: The sending unit reports the measurement result of the positioning reference signal to the location management device when the user equipment is in the connected state. The UE location information reporting method provided in this application is also applicable to a case in which the UE in the connected state reports the measurement result of the positioning reference signal based on the motion.

In a possible implementation, the first message further includes measurement periodicity indication information, and the measurement periodicity indication information is used to indicate a measurement periodicity of the preset parameter. The user equipment further includes a measurement unit, configured to obtain the preset parameter through measurement based on the measurement periodicity. The user equipment may obtain the preset parameter through measurement of the measurement unit based on the received measurement periodicity.

In a possible implementation, the measurement result of the positioning reference signal includes a measurement result of a positioning reference signal that is obtained after the user equipment meets the motion trigger condition. The UE may report the measurement result of the positioning reference signal that is obtained by the UE through measurement based on the motion of the UE.

In a possible implementation, the measurement result of the positioning reference signal further includes a measurement result of a positioning reference signal that is obtained before the user equipment meets the motion trigger condition. The UE may further report the measurement result of the positioning reference signal that is obtained by the UE in the connected state through measurement.

In a possible implementation, the measurement result of the positioning reference signal includes one or more of the following information: reference signal received power RSRP, reference signal received quality RSRQ, a reference signal time difference RSTD, narrowband reference signal received power NRSRP, or narrowband reference signal received quality NRSRQ. Specific content in the measurement result that is of the positioning reference signal used to locate the UE and that is reported by the UE is not limited in this application. For example, the specific content may be at least one of the RSRP, the RSRQ, the RSTD, the NRSRP, the NRSRQ, or the like.

In a possible implementation, the location management device includes the location management network element LMF or the location management component LMC. A structure and the like of the location management device used to manage a UE reporting mechanism and locate the UE are not limited in this embodiment of this application. For example, the location management device may be either the LMF or the LMC.

In a possible implementation, the sending unit is further configured to: before the receiving unit receives the first message, send capability information of the user equipment to the location management device. The receiving unit is further configured to receive assistance information from the location management device, where the capability information of the user equipment is used to indicate at least a locating mode type supported by the user equipment and/or a positioning reference signal measurement capability. The UE location information reporting method provided in this application may be implemented based on several information types in a conventional LPP protocol.

According to a fourth aspect, a location management device is provided. The location management device includes: a sending unit, configured to send a first message to user equipment, where the first message includes a motion trigger condition, and the motion trigger condition is used to trigger the user equipment to report a measurement result of a positioning reference signal based on motion; and a receiving unit, configured to receive the measurement result of the positioning reference signal from the user equipment, where the user equipment reports the measurement result of the positioning reference signal to the location management device when determining that the motion trigger condition is met.

In the technical solution provided in the fourth aspect, the location management device may indicate the UE to report, based on the received motion trigger condition when the UE moves, a measurement result obtained by the UE by measuring a plurality of positioning reference signals. The location management device may determine a location of the UE based on the measurement result reported by the UE. In this manner, a problem of excessive power consumption and a waste of link resources that are caused by a fact that the UE in an idle state or an inactive state periodically enters a connected state to report the measurement result of the reference signals can be resolved.

In a possible implementation, the motion trigger condition includes that a change value of a preset parameter of the user equipment is greater than a preset threshold; and the preset parameter includes at least one of a location parameter of the user equipment, a motion parameter of the user equipment, or a received signal parameter of the user equipment. The location management device may indicate the UE to determine, based on the preset parameter, whether the UE meets the motion trigger condition, so that reporting of the measurement result of the positioning reference signal is triggered when the UE moves. It may be understood as that a change value of the location parameter of the UE, the motion parameter of the UE, or the received signal parameter of the UE is greater than the preset threshold is caused by motion of the UE.

In a possible implementation, the first message further includes measurement manner indication information, the measurement manner indication information is used to indicate a measurement manner of the preset parameter, and the measurement manner includes one or more of sensor measurement, satellite measurement, or signal receiving apparatus measurement. The location management device may indicate a measurement manner used by the UE to measure the preset parameter, so that the UE may obtain the preset parameter through measurement based on the measurement manner.

In a possible implementation, the first message further includes measurement periodicity indication information, and the measurement periodicity indication information is used to indicate a measurement periodicity of the preset parameter. The location management device may indicate a measurement periodicity used by the UE to measure the preset parameter, so that the UE may obtain the preset parameter based on the measurement periodicity.

In a possible implementation, the location management device includes either a location management network element LMF or a location management component LMC. A structure and the like of the location management device used to manage a UE reporting mechanism and locate the UE are not limited in this embodiment of this application. For example, the location management device may be either the LMF or the LMC.

In a possible implementation, the receiving unit is further configured to: before the sending unit sends the first message to the user equipment, receive a location service request from an access and mobility management device, where the location service request is used to request to locate the user equipment. After the receiving unit receives the measurement result of the positioning reference signal from the user equipment, the sending unit is further configured to send a location service response to the access and mobility management device, where the location service response includes a result of locating the user equipment by the location management device. In this application, the location management device may indicate, based on the location service request initiated by the access and mobility management device, the UE to report the measurement result of the positioning reference signal based on the motion of the UE. Locating scenarios for use are wider and more flexible.

In a possible implementation, the location management device autonomously sends the first message to the user equipment through the sending unit. In this application, the location management device may autonomously indicate the UE to report the measurement result of the positioning reference signal based on the motion of the UE. Locating scenarios for use are wider and more flexible.

In a possible implementation, the receiving unit is further configured to: before the sending unit sends the first message to the user equipment, receive capability information of the user equipment from the user equipment. The sending unit is further configured to send assistance information to the user equipment, where the capability information of the user equipment is used to indicate at least a locating mode type supported by the user equipment and/or a positioning reference signal measurement capability. The UE location information reporting method provided in this application may be implemented based on several information types in a conventional LPP protocol.

According to a fifth aspect, user equipment is provided. The user equipment includes: a memory, configured to store computer program code, where the computer program code includes instructions; a radio frequency circuit, configured to send and receive a wireless signal; and a processor, configured to execute the foregoing instructions, so that the user equipment performs the user equipment location information reporting method in any possible implementation of the first aspect.

According to a sixth aspect, a location management device is provided. The location management device includes: a memory, configured to store computer program code, where the computer program code includes instructions; a radio frequency circuit, configured to send and receive a wireless signal; and a processor, configured to execute the foregoing instructions, so that the location management device performs the user equipment location information reporting method in any possible implementation of the second aspect.

According to a seventh aspect, a communication system is provided. The communication system includes any plurality of network elements in any possible implementation of the third aspect or the fourth aspect. The communication system is configured to implement the user equipment location information reporting method in any possible implementation of the first aspect or the second aspect.

According to an eighth aspect, a communication system is provided. The communication system includes any plurality of network elements in any possible implementation of the fifth aspect or the sixth aspect. The communication system is configured to implement the user equipment location information reporting method in any possible implementation of the first aspect or the second aspect.

According to a ninth aspect, a computer-readable storage medium is provided. The computer-readable storage medium stores computer-executable instructions. When the computer-executable instructions are executed by a processor, the user equipment location information reporting method in any possible implementation of the first aspect or the second aspect is implemented.

According to a tenth aspect, a chip system is provided. The chip system includes a processor and a memory. The memory stores instructions. When the instructions are executed by the processor, the user equipment location information reporting method in any possible implementation of the first aspect or the second aspect is implemented. The chip system may include a chip, or may include a chip and another discrete component.

According to an eleventh aspect, a computer program product is provided. When the computer program product runs on a computer, the user equipment location information reporting method in any possible implementation of the first aspect or the second aspect is implemented.

### BRIEF DESCRIPTION OF DRAWINGS

FIG. 1 (a) , FIG. 1 (b) and FIG. 1 (d) area schematic diagram of examples of two network architectures used to locate UE according to an embodiment of this application;
FIG. 2 is a schematic diagram of a hardware structure of a network device according to an embodiment of this application;
FIG. 3 is a schematic diagram of a hardware structure of UE according to an embodiment of this application;
FIG. 4 is a schematic diagram of state switching between a connected state, an inactive state, and an idle state according to an embodiment of this application;
FIG. 5 is a flowchart 1 of a UE location information reporting method according to an embodiment of this application;
FIG. 6 is a flowchart 2 of a UE location information reporting method according to an embodiment of this application;
FIG. 7 is a flowchart 3 of a UE location information reporting method according to an embodiment of this application;
FIG. 8A and FIG. 8B are an interaction diagram 1 of a UE location information reporting method according to an embodiment of this application;
FIG. 9A and FIG. 9B are an interaction diagram 2 of a UE location information reporting method according to an embodiment of this application;
FIG. 10A and FIG. 10B are an interaction diagram 3 of a UE location information reporting method according to an embodiment of this application;
FIG. 11A and FIG. 11B are an interaction diagram 4 of a UE location information reporting method according to an embodiment of this application;
FIG. 12A and FIG. 12B are an interaction diagram 5 of a UE location information reporting method according to an embodiment of this application;
FIG. 13A and FIG. 13B are an interaction diagram 6 of a UE location information reporting method according to an embodiment of this application;
FIG. 14 is a schematic diagram of a structure of user equipment according to an embodiment of this application; and
FIG. 15 is a schematic diagram of a structure of a location management device according to an embodiment of this application.

### DESCRIPTION OF EMBODIMENTS

This application provides a user equipment location information reporting method. The method is applied to a process in which a location management device, an access and mobility management device, or a third-party device locates user equipment. Specifically, when meeting a preset trigger condition (for example, when the user equipment moves), the user equipment may report, based on an indication of the location management device (such as an LMF or an LMC), a result of measuring a plurality of received positioning reference signals by the user equipment UE. The location management device (such as the LMF or the LMC) may determine a location of the UE based on the measurement result reported by the UE.

The user equipment location information reporting method provided in this application may be applied to various communication systems, such as a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a future 5th generation (5th generation, 5G) system, or a new radio (new radio, NR) system. A 5G mobile communication system in this application includes a non-standalone (non-standalone, NSA) 5G mobile communication system or a standalone (standalone, SA) 5G mobile communication system. The technical solutions provided in this application may be further applied to a future communication system, for example, a 6th generation mobile communication system. Alternatively, the communication system may be a public land mobile network (Public Land Mobile Network, PLMN), a device-to-device (device-to-device, D2D) communication system, a machine-to-machine (machine-to-machine, M2M) communication system, an internet of things (Internet of Things, IoT) communication system, or another communication system.

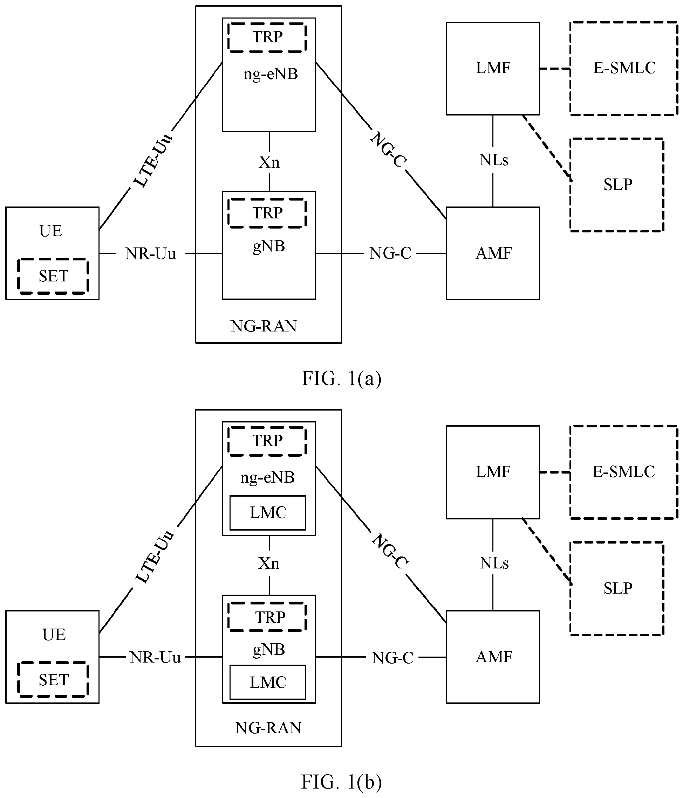

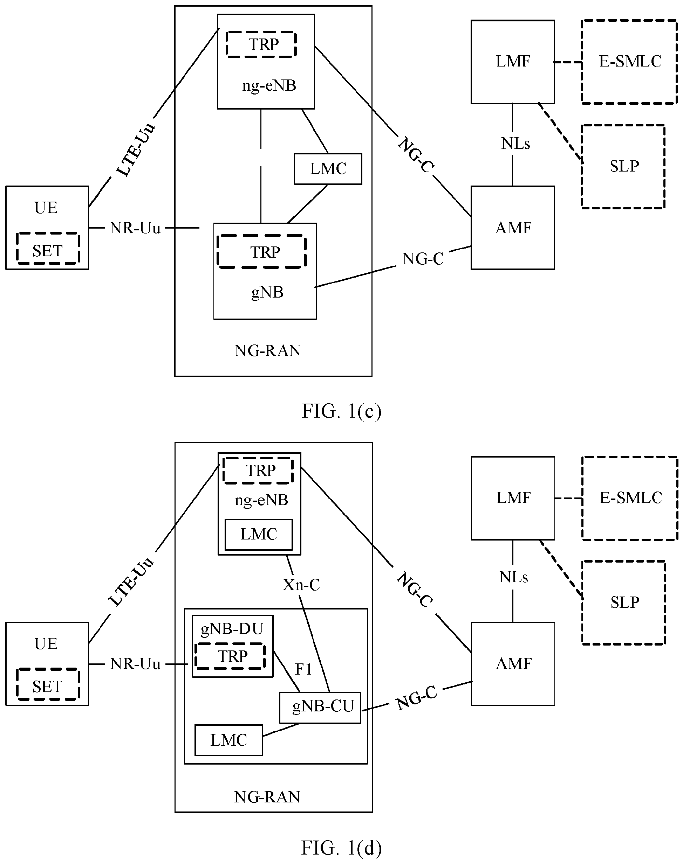

FIG. 1 (a) , FIG. 1 (b) and FIG. 1 (d) are a schematic diagram of examples of four network architectures applicable to locating of UE. As shown in FIG. 1(a), a terminal device is connected to an NG-RAN through an LTE-Uu interface and/or an NR-Uu interface via a next-generation eNodeB (next-generation eNodeB, ng-eNB) and/or a gNB respectively. The NG-RAN may include one or more ng-eNBs. The NG-RAN may alternatively include one or more transmission reception points (transmission/reception points, TRPs). The NG-RAN may alternatively include one or more gNBs. The NG-RAN may alternatively include one or more ng-eNBs and gNBs. The ng-eNB is a base station in an LTE communication system. The gNB is a base station in an NR communication system. The ng-eNB communicates with the gNB through an Xn interface. The NG-RAN communicates with an access and mobility management network element (access and mobility management function, AMF) through an NG-C interface. In a UE locating process, the AMF is equivalent to a router for communication between a base station and a location management function network element (location management function, LMF), and is configured to implement a function such as access management. The LMF is configured to implement a function such as location management, including managing a process of reporting UE location information and locating UE. The AMF communicates with the LMF through an NLs interface.

Optionally, one LMF may further have a signaling connection to an enhanced serving mobile location center (enhanced serving mobile location center, E-SMLC). The E-SMLC is a core network entity responsible for processing a location request in an E-UTRA location architecture, for example, locating specific UE and sending assistance data to UE. Therefore, the signaling connection between the LMF and the E-SMLC enables the LMF to obtain location data from an E-UTRA system.

Optionally, one LMF may also have a signaling connection to a secure user plane location platform (secure user plane location platform, SLP). The SLP is an SUPL (secure user plane location) entity responsible for locating in user plane locating. Therefore, the signaling connection between the LMF and the SLP enables the LMF to support a user plane locating solution. The SUPL is a locating protocol architecture specified in the open mobile alliance (open mobile alliance, OMA).

As shown in FIG. 1(b), a location management component (location management component, LMC) may be further integrated into a gNB and/or an ng-eNB.

As shown in FIG. 1(c), an LMC may be integrated into an NG-RAN independently of a gNB and an ng-eNB, and serves as a node (node) of the NG-RAN.

The LMC serving as the node (node) of the NG-RAN may implement a part of functions of an LMF. In this application, in a UE location information reporting process, UE may report a measurement result of a reference signal to the LMC. The UE does not need to interaction with a core network, so that signaling overheads can be reduced, and a positioning latency can be reduced.

In some possible structures, an access network device may include a central unit (central unit, CU) and a distributed unit (distributed unit, DU). The CU may also be referred to as a control unit (control unit). In this CU - DU structure, protocol layers of the access network device may be separated, where functions of some protocol layers are centrally controlled by the CU, functions of some or all of remaining protocol layers are distributed in the DU, and the CU centrally controls the DU. For example, a radio resource control (radio resource control, RRC) layer, a service data adaptation protocol (service data adaptation protocol, SDAP) layer, and a packet data convergence protocol (packet data convergence protocol, PDCP) layer may be deployed on the CU, and a radio link control (radio link control, RLC) layer, a media access control (media access control, MAC) layer, and a physical (Physical) layer are deployed on the DU. The CU and the DU are connected through an F1 interface. The CU that represents the gNB is connected to the core network through an NG interface.

Optionally, a structure in which a control plane (control plane) entity is separated from a user plane (user plane, UP) network element may alternatively be used for the CU, and one control plane network element manages a plurality of user plane network elements.

In an example, one gNB may have one gNB-CU-CP, a plurality of gNB-CU-UPs, and a plurality of gNB-DUs. One gNB-CU-CP is connected to a plurality of gNB-CU-UPs through E1 interfaces. One gNB-CU-CP may be connected to a plurality of gNB-DUs through F1-C interfaces. One gNB-DU may be connected to a plurality of gNB-CU-UPs through F1-U interfaces.

As shown in FIG. 1(d), a gNB may include a gNB-DU and a gNB-CU. The gNB-DU is connected to the gNB-CU through an F1 interface, and the gNB-CU is connected to an ng-eNB through an Xn-C interface. An LMC is further integrated into the gNB.

It should be understood that the locating systems shown in FIG. 1(a), in FIG. 1(b), in FIG. 1(c), and in FIG. 1(d) may include one or more gNBs and one or more UEs. One gNB may transmit data or control signaling to one or more UEs. A plurality of gNBs may also transmit data or control signaling to one UE.

It should be further understood that devices or function nodes included in the locating systems shown in FIG. 1(a), in FIG. 1(b), in FIG. 1(c), and in FIG. 1(d) are merely examples for description. This constitutes no limitation on this application. Actually, the locating systems shown in FIG. 1(a), in FIG. 1(b), in FIG. 1(c), and in FIG. 1(d) may further include another network element or device or function node that has an interaction relationship with the devices or the function nodes shown in the figure. This is not specifically limited herein.

It should be further understood that, in this application, the location management device may be the LMF shown in FIG. 1(a), in FIG. 1(b), in FIG. 1(c), and in FIG. 1(d), or may be the LMC shown in FIG. 1(b), in FIG. 1(c), and in FIG. 1(d). Alternatively, the location management device may be another network device having a location management function. An example in which the location management device is an LMF or an LMC is merely used in FIG. 1(a), in FIG. 1(b), in FIG. 1(c), and in FIG. 1(d). The location management device is not specifically limited in this application.

The access network device in this application may be the ng-eNB, the gNB, or the TRP shown in FIG. 1(a), in FIG. 1(b), in FIG. 1(c), and in FIG. 1(d). Alternatively, the access network device may be a base station defined in the 3rd generation partnership project (3rd generation partnership project, 3GPP), for example, a base transceiver station (base transceiver station, BTS) in a GSM or CDMA system, a NodeB (NodeB, NB) in a WCDMA system, or an evolved NodeB (evolved NodeB, eNB/eNodeB) in an LTE system.

In addition, when the eNB accesses an NR core network, a next generation core (Next Generation Core, NGC) or a 5G core network (5th Generation Core Network, 5GC), the eNB may also be referred to as an eLTE eNB. Specifically, the eLTE eNB is an evolved LTE base station device based on the eNB, and may be directly connected to the 5G CN. The eLTE eNB also belongs to a base station device in NR.

Alternatively, the access network device may be a wireless terminal (wireless terminal, WT), for example, an access point (access point, AP), an access controller (access controller, AC), or another network device that has a capability of communicating with user equipment and a core network, for example, a relay device, a vehicle-mounted device, or an intelligent wearable device. A type of the access network device is not limited in this application.

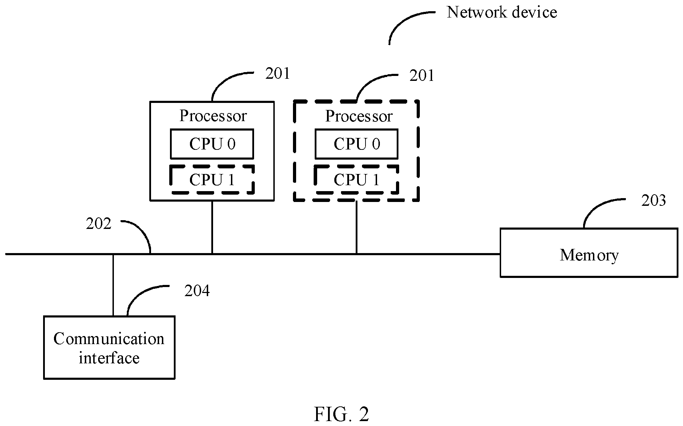

FIG. 2 is a schematic diagram of a hardware structure of a network device. As shown in FIG. 2, the network device may include a processor 201, a communication line 202, a memory 203, and at least one communication interface (where FIG. 2 is described merely by using an example in which the network device includes a communication interface 204).

The processor 201 may be a general-purpose central processing unit (central processing unit, CPU), a microprocessor, an application-specific integrated circuit (application-specific integrated circuit, ASIC), or one or more integrated circuits configured to control program execution of the solutions in this application.

The communication line 202 may include a path on which information is transferred between the foregoing components.

The communication interface 204 is configured to communicate with another device or a communication network such as the Ethernet, a radio access network (radio access network, RAN), or a wireless local area network (wireless local area network, WLAN) by using any apparatus such as a transceiver.

The memory 203 may be a read-only memory (read-only memory, ROM) or another type of static storage device that can store static information and instructions, or a random access memory (random access memory, RAM) or another type of dynamic storage device that can store information and instructions. The memory 203 may alternatively be an electrically erasable programmable read-only memory (electrically erasable programmable read-only memory, EEPROM), a compact disc read-only memory (compact disc read-only memory, CD-ROM) or another compact disc storage, optical disc storage (including a compact disc, a laser disc, an optical disc, a digital versatile disc, a Blu-ray disc, or the like), or magnetic disk storage medium or another magnetic storage device, or any other medium that can be used to carry or store expected program code in a form of instructions or a data structure and that is accessible to a computer, but is not limited thereto. The memory may exist independently, and is connected to the processor through the communication line 202. Alternatively, the memory may be integrated with the processor.

The memory 203 is configured to store computer-executable instructions for performing the solutions in this application. The memory 203 can store instructions for implementing two modular functions: a sending instruction, a receiving instruction, and a processing instruction, and the processor 201 controls execution of the instructions. The processor 201 is configured to execute the computer-executable instructions stored in the memory 203, to implement the data transmission methods provided in this application. The memory 203 shown in FIG. 2 is merely a schematic diagram. The memory may further include another functional instruction. This is not limited in the present invention.

Optionally, the computer-executable instructions in this application may also be referred to as application program code. This is not specifically limited in this application.

During specific implementation, in an embodiment, the processor 201 may include one or more CPUs, for example, a CPU 0 and a CPU 1 in FIG. 2.

It should be noted that FIG. 2 is merely used as an example of the network device, and a specific structure of the network device is not limited. For example, the network device may further include another functional module. In addition, the access network device (such as an access network device) and the core network device (such as a location management device, an access and mobility management device, or a location service entity) in this application each may have a hardware structure that is the same as or similar to that in FIG. 2.

The UE in this application may be a desktop device, a laptop device, a handheld device, a wearable device, a smart home device, a computing device, a vehicle-mounted device, or the like having a wireless connection function, for example, a netbook, a tablet computer, a smartwatch, an ultra-mobile personal computer (ultra-mobile personal computer, UMPC), a smart camera, the netbook, a personal digital assistant (personal digital assistant, PDA), a portable multimedia player (portable multimedia player, PMP), an AR (augmented reality) device/a VR (virtual reality) device, a wireless device on a flight vehicle, a wireless device on a robot, a wireless device in industrial control, a wireless device in telemedicine, a wireless device in a smart grid, a wireless device in a smart city (smart city), or a wireless device in a smart home (smart home). Alternatively, the user equipment may be a wireless device or the like in a narrowband (narrowband, NB) technology.

The user equipment UE in this application may alternatively be an access terminal, a subscriber unit, a subscriber station, a mobile station, a relay station, a remote station, a remote terminal, a mobile device, a user terminal (user terminal), user equipment (user equipment, UE), a terminal (terminal), a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a future 5G network, a terminal device in a future evolved public land mobile network (public land mobile network, PLMN), a terminal device in a future internet of vehicles, or the like. A specific type, a structure, and the like of the user equipment UE are not limited in this application.

In addition, the terminal device in this application may alternatively be a terminal device in an IoT system. The IoT is an important part of future development of information technologies. A main technical feature of the IoT is connecting a thing to a network by using a communication technology, to implement an intelligent network for interconnection between a person and a machine or between things. In embodiments of this application, an IoT technology may implement massive connections, deep coverage, and terminal power saving by using, for example, a narrowband (narrowband, NB) technology.

In addition, in this application, the terminal device may further include a sensor, for example, an intelligent printer, a train detector, or a gas station. Main functions of the terminal device include: collecting data (for some terminal devices), receiving control information and downlink data of an access network device, sending electromagnetic waves, and transmitting uplink data to the access network device.

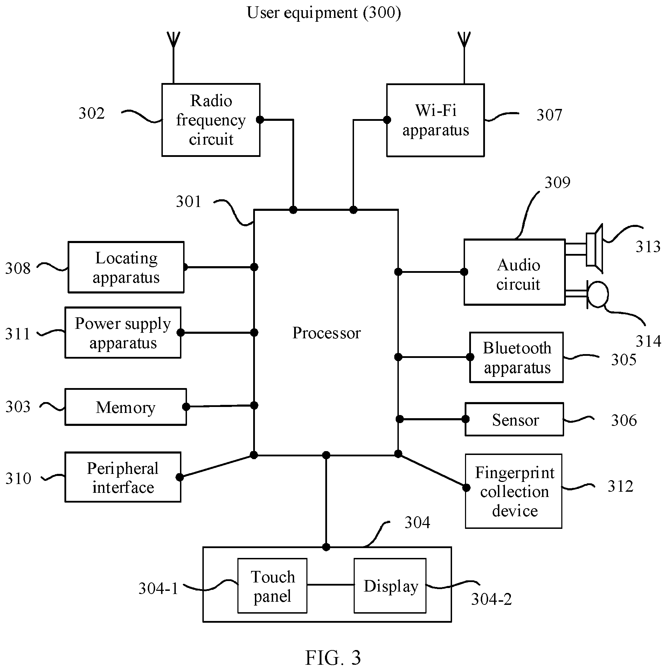

FIG. 3 is a schematic diagram of a hardware structure of UE. As shown in FIG. 3, the UE 300 may specifically include components such as a processor 301, a radio frequency (RF) circuit 302, a memory 303, a touchscreen 304, a Bluetooth apparatus 305, one or more sensors 306, a Wi-Fi apparatus 307, a locating apparatus 308, an audio circuit 309, a peripheral interface 310, and a power supply system 311. These components may perform communication by using one or more communication buses or signal lines (not shown in FIG. 3). A person skilled in the art may understand that the hardware structure shown in FIG. 3 does not constitute a limitation on the UE 300, and the UE 300 may include more or fewer components than those shown in the figure, or may combine some components, or may have different component arrangements.

The following describes each component of the UE 300 in detail with reference to FIG. 3.

The processor 301 is a control center of the UE 300, is connected to all components of the UE 300 by using various interfaces and lines, and performs various functions of the UE 300 and data processing by running or executing an application client-side program (which may be referred to as an App for short below) stored in the memory 303 and by invoking data stored in the memory 303. In some embodiments, the processor 301 may be a general-purpose central processing unit (central processing unit, CPU), a microprocessor, an application-specific integrated circuit (application-specific integrated circuit, ASIC), or one or more integrated circuits configured to control program execution of the solutions in this application. The processor 301 may include one or more CPUs. For example, the processor 301 may be a Kirin 360 chip.

The radio frequency circuit 302 may be configured to send and receive a radio signal in an information receiving and sending process or a call process. The radio frequency circuit 302 may include a signal receiving apparatus, configured to receive a wireless signal. Particularly, after receiving downlink data from a base station, the radio frequency circuit 302 may send the downlink data to the processor 301 for processing, and send uplink data to the base station. The radio frequency circuit usually includes but is not limited to an antenna, at least one amplifier, a transceiver, a coupler, a low noise amplifier, a duplexer, and the like. In addition, the radio frequency circuit 302 may further communicate with another device through wireless communication. The wireless communication may use any communication standard or protocol, including but not limited to a global system for mobile communications, a general packet radio service, code division multiple access, wideband code division multiple access, long term evolution, an e-mail message, an SMS message service, and the like.

In this application, the signal receiving apparatus is further configured to measure a received signal parameter (such as RSRP, RSRQ, an RSTD, NRSRP, or NRSRQ) of a network environment in which the UE is located. When the UE determines that the sensor measures that a change value of the received signal parameter of the UE is greater than a preset threshold, the UE may infer that the UE moves, and the UE triggers reporting of a measurement result of a positioning reference signal, so that a location management device locates the UE.

The memory 303 is configured to store an application program and data. The memory 303 may be a read-only memory (read-only memory, ROM) or another type of static storage device that can store static information and instructions, or a random access memory (random access memory, RAM) or another type of dynamic storage device that can store information and instructions. The memory 303 may alternatively be an electrically erasable programmable read-only memory (electrically erasable programmable read-only memory, EEPROM), a compact disc read-only memory (compact disc read-only memory, CD-ROM) or another compact disc storage, optical disc storage (including a compact disc, a laser disc, an optical disc, a digital versatile disc, a Blu-ray disc, or the like), or magnetic disk storage medium or another magnetic storage device, or any other medium that can be used to carry or store expected program code in a form of instructions or a data structure and that is accessible to a computer, but is not limited thereto. The processor 301 performs various functions of the UE 300 and data processing by running the application program and the data that are stored in the memory 303. The memory 303 mainly includes a program storage area and a data storage area. The program storage area may store an operating system, and an application program required by at least one function (such as an audio playing function and an image playing function). The data storage area may store data (such as audio data and a phone book) created based on use of the UE 300. The memory 303 may store instructions for implementing two modular functions: a receiving instruction and a connection instruction, and the processor 301 controls execution of the instructions. The processor 301 is configured to execute the computer-executable instructions stored in the memory 303, to implement the user equipment location information reporting methods provided in this application. In addition, the memory 303 may include a high-speed random access memory, and may further include a nonvolatile memory such as a magnetic disk storage device and a flash memory, or another volatile solid-state storage device. The memory 303 may store various operating systems such as an iOS operating system and an Android operating system.

The UE 300 may further include at least one sensor 306, for example, a light sensor, a movement sensor (including an acceleration sensor, a gyroscope sensor, and the like), a barometer sensor, a magnetic sensor, and another sensor. Specifically, the light sensor may include an ambient light sensor and a proximity sensor. The ambient light sensor may adjust luminance of a display of the touchscreen 304 based on brightness of ambient light, and the proximity sensor may turn off the display when the UE 300 moves to an ear. As a type of movement sensor, the acceleration sensor may detect a value of acceleration in each direction (usually on three axes), may detect a value and a direction of gravity in a stationary state, and may be used in an application for identifying a smartphone posture (such as screen switching between a landscape mode and a portrait mode, a related game, or magnetometer posture calibration), a function related to vibration identification (such as a pedometer or a knock), or the like. The gyroscope sensor may be configured to determine a motion posture of the UE 300. In this application, a rotation direction and a rotation angular rate of the UE 300 may be determined through the gyroscope sensor. The magnetic sensor may be a device that converts external factors such as a magnetic field, a current, stress and strain, temperature and light causing a magnetic property change of a sensitive element into electrical signals to detect corresponding physical parameters in this manner. In this application, included angles between the UE 300 and four directions: east, south, west, and north, may be measured through the magnetic sensor. The barometric pressure sensor is configured to measure barometric pressure. In some embodiments, the UE 300 may calculate an altitude through a barometric pressure value obtained by the barometer sensor through measurement, to assist in locating and navigation. Other sensors such as a hygrometer, a thermometer, and an infrared sensor may be further configured in the UE 300. Details are not described herein.

In this application, when the UE determines that the sensor measures that a change value of a motion parameter of the UE is greater than a preset threshold, the UE may infer that the UE moves, and the UE may trigger reporting of a measurement result of a positioning reference signal, so that the location management device locates the UE.

The locating apparatus 308 is configured to provide a geographical location for the UE 300. It may be understood that the locating apparatus 308 may be specifically a receiver of a locating system such as a global positioning system (GPS), a BeiDou navigation satellite system, a Galileo satellite navigation system, or a Russian GLONASS. After receiving the geographical location sent by the foregoing locating system, the locating apparatus 308 sends the information to the processor 301 for processing, or sends the information to the memory 303 for storage. In some other embodiments, the locating apparatus 308 may alternatively be a receiver of an assisted global positioning system (AGPS). The AGPS system serves as an assisted server to assist the locating apparatus 308 in completing ranging and locating services. In this case, the assisted locating server may communicate with the locating apparatus 308 (namely, the GPS receiver) of the UE 300 through a wireless communication network, and provide locating assistance. In some other embodiments, the locating apparatus 308 may alternatively be a locating technology based on a Wi-Fi access point. Each Wi-Fi access point has a globally unique MAC address, and the user equipment may scan and collect a broadcast signal of a surrounding Wi-Fi access point when Wi-Fi is enabled. Therefore, the user equipment may obtain a MAC address broadcast by the Wi-Fi access point. The user equipment sends, through the wireless communication network, such data (such as the MAC address) that can identify the Wi-Fi access point to a location server. The location server retrieves a geographical location of each Wi-Fi access point, calculates a geographical location of the user equipment with reference to strength of the Wi-Fi broadcast signal, and sends the geographical location of the user equipment to the locating apparatus 308 of the user equipment.

In this application, when the UE determines that the sensor measures that a change value of a location parameter of the UE is greater than a preset threshold, the UE may infer that the UE moves, and the UE may trigger reporting of a measurement result of a positioning reference signal, so that the location management device locates the UE.

Although not shown in FIG. 3, the UE 300 may further include a camera (a front-facing camera and/or a rear-facing camera), a flash, a micro projection apparatus, a near field communication (NFC) apparatus, and the like. Details are not described herein.

It should be understood that the hardware modules included in the user equipment shown in FIG. 3 are merely examples for description, and constitute no limitation on this application. Actually, the user equipment shown in FIG. 3 may further include another hardware module that has an interaction relationship with the hardware modules shown in the figure. This is not specifically limited herein.

For ease of understanding, concepts and terms that may appear in this application are explained below.
1. A connected (connected) state is also referred to as a connected mode. The connected state means that a radio resource control (radio resource control, RRC) connection has been set up, and therefore is also referred to as RRC_CONNECTED. When UE is in the connected state, a connection between the UE and an access network (such as a base station) and a connection between the UE and a core network (such as an AMF) are set up. If data needs to be transmitted, data transmission may be directly completed through the connections that are set up. The RRC connection is used to process a control plane message between the UE and the access network.
2. An inactive (inactive) state is also referred to as an inactive mode (RRC INACTIVE) or a third state. The inactive state means that an RRC connection between the UE and the access network (such as the base station) is broken, but a connection between the access network (such as the base station) of the UE and the core network (such as the AMF) is not broken. When the UE is in the inactive state, if data needs to be transmitted, the connection between the UE and the access network (such as the base station) needs to be recovered before data transmission can be performed.
3. An idle (idle) state is also referred to as an idle mode (RRC IDLE). The idle state means that an RRC connection between the UE and the access network (such as the base station) is not set up, and a connection between the access network (such as the base station) of the UE and the core network (such as the AMF) is not set up. When the UE is in the idle state, if data needs to be transmitted, the connection between the UE and the access network (such as the base station) and the connection between the access network (such as the base station) of the UE and the core network (such as the AMF) need to be set up before data transmission can be performed.

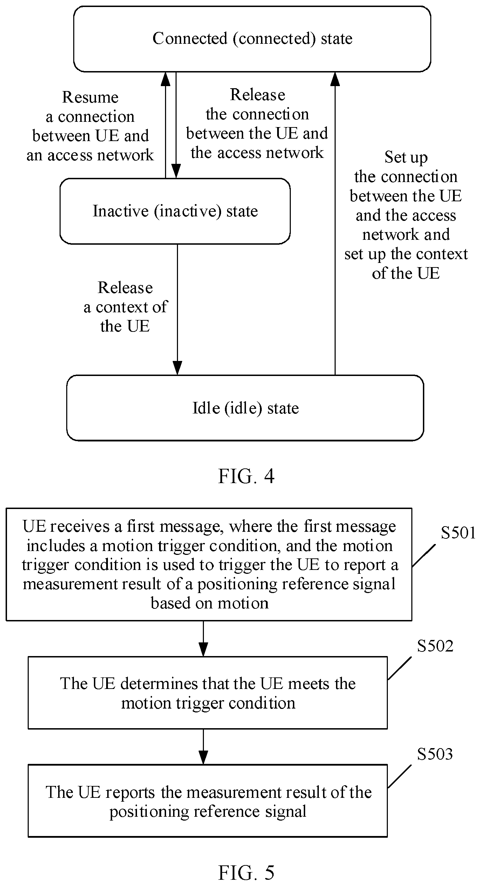

FIG. 4 is a schematic diagram of state switching between a connected (connected) state, an inactive (inactive) state, and an idle (idle) state. As shown in FIG. 4, when UE enters the connected state from the idle state, a connection between the UE and an access network device needs to be set up, and a context of the UE needs to be set up. When the UE enters the inactive state from the connected state, the connection between the UE and the access network device is broken, and a connection between the access network device of the UE and a core network device continues to be maintained. When the UE enters the idle state from the inactive state, the context of the UE is released. For specific descriptions of the idle state, the inactive state, and the connected state, refer to explanations and descriptions in a conventional technology. Details are not described in this application.

In embodiments of this application, UE having the hardware structure shown in FIG. 3 is used as an example to describe a UE location information reporting method provided in embodiments of this application.

As shown in FIG. 5, a UE location information reporting method provided in an embodiment of this application may include S501 to S503.

S501: UE receives a first message. The first message includes a motion trigger condition (such as motionTrigger). The motion trigger condition is used to trigger the UE to report a measurement result of a positioning reference signal based on motion.

The measurement result of the positioning reference signal is used to locate the UE. Specific descriptions of the measurement result of the positioning reference signal are provided in S503 below.

In this embodiment of this application, the UE may receive the first message from an LMF. Alternatively, the UE may receive the first message from a device that has a location management function, for example, an LMC or a location management unit (location management unit, LMU). A source of the first message is not specifically limited in this embodiment of this application.

For example, the first message may be a request location message. The request location message may be autonomously triggered by a location management device such as the LMF or the LMC, or may be triggered by the location management device such as the LMF or the LMC based on a request of an access and mobility management device (such as an AMF) or a location service entity (location service entity, LCS entity). An entity that triggers the location management device to send the request location message is not limited in this embodiment of this application.

S502: The UE determines that the UE meets the motion trigger condition.

That the UE determines that the UE meets the motion trigger condition may include: The UE determines that a change value of a preset parameter of the UE is greater than a preset threshold. The preset parameter of the UE includes but is not limited to at least one of a location parameter of the UE, a motion parameter of the UE, or a received signal parameter of the UE. The preset threshold is greater than or equal to 0. The preset threshold is described in detail below.

In a possible case, when the UE determines that the UE meets the motion trigger condition, the UE is in an idle state or an inactive state.

In another possible case, when the UE determines that the UE meets the motion trigger condition, the UE is in a connected state.

S503: The UE reports the measurement result of the positioning reference signal.

The UE may report the measurement result of the positioning reference signal to the LMF. The UE may alternatively report the measurement result of the positioning reference signal to a network element such as the LMC or the LMU. Specifically, if the UE receives the first message (such as the request location message) from the LMF in step S501, the UE reports the measurement result of the positioning reference signal to the LMF. If the UE receives the first message from the LMC in S501, the UE reports the measurement result of the positioning reference signal to the LMC. If the UE receives the first message from the LMU in S501, the UE reports the measurement result of the positioning reference signal to the LMU.

In this embodiment of this application, the measurement result of the positioning reference signal that is reported by the UE may include a measurement result of positioning reference signals that is obtained by the UE by measuring a plurality of positioning reference signals after the UE determines that the motion trigger condition is met, and/or a measurement result of positioning reference signals that is obtained by the UE by measuring a plurality of positioning reference signals before the UE determines that the motion trigger condition is met.

It should be noted that, if the preset threshold is equal to 0, the measurement result of the positioning reference signal that is reported by the UE may include a measurement result of positioning reference signals that is obtained by the UE by measuring a plurality of positioning reference signals after the UE determines that the motion trigger condition is met, or a measurement result of positioning reference signals that is obtained by the UE by measuring a plurality of positioning reference signals before the UE determines that the motion trigger condition is met.

If the preset threshold is greater than 0, the measurement result of the positioning reference signal that is reported by the UE may include a measurement result of positioning reference signals that is obtained by the UE by measuring a plurality of positioning reference signals after the UE determines that the motion trigger condition is met, and/or a measurement result of positioning reference signals that is obtained by the UE by measuring a plurality of positioning reference signals before the UE determines that the motion trigger condition is met.

For example, the UE may periodically measure a plurality of positioning reference signals based on a preset measurement periodicity, and store a measurement result of the positioning reference signals. Alternatively, the UE may measure a plurality of positioning reference signals in a first preset time period, and store a measurement result of the positioning reference signals. The preset measurement periodicity and/or the first preset time period for measuring the positioning reference information may be indicated by the location management device (such as the LMF or the LMC). For example, the first message may further include the preset measurement periodicity and/or the first preset time period for measuring the positioning reference information.

The measurement result of the positioning reference signal (positioning reference signal, PRS) may include but is not limited to one or more of reference signal received power (reference signal received power, RSRP), reference signal received quality (reference signal received quality, RSRQ), a reference signal time difference (reference signal time difference, RSTD), narrowband reference signal received power (narrowband reference signal reception power, NRSRP), or narrowband reference signal received quality (narrowband reference signal reception quality, NRSRQ).

Optionally, the measurement result of the positioning reference signal may further include location calculation information (such as position estimate) of the UE calculated by the UE based on the positioning reference signal. The location management device (such as the LMF or the LMC) may further calculate, based on the location calculation information (such as position estimate) reported by the UE, a result of locating the UE, or may directly use the location calculation information (such as position estimate) reported by the UE as a result of locating the UE.

It should be noted that in this embodiment of this application, an example in which the UE reports the measurement result of the PRS when the motion trigger condition is met is merely used. Actually, the UE may further measure a positioning-related reference signal such as a sounding reference signal (sounding reference signal, SRS), channel state information (channel state information, CSI), or a synchronization signal and physical broadcast channel block (Synchronization Signal and Physical broadcast channel block, SSB), and report measurement information used to locate the UE, for example, a measurement result of the SRS, a measurement result of the CSI, or a measurement result of the SSB when the motion trigger condition is met. A measurement manner used by the UE and specific content of the measurement result reported by the UE are not limited in this embodiment of this application.

Further, if the UE determines that the UE is in the idle state or the inactive state when the UE meets the foregoing motion trigger condition, step S503 may include the following step (1) or (2).
(1) The UE in the idle state or the inactive state reports the measurement result of the positioning reference signal to the location management device (such as the LMF or the LMC).

For example, the UE in the idle state or the inactive state may report the measurement result of the positioning reference signal to the location management device (such as the LMF or the LMC) based on early data transmission (early data transmission, EDT) when the motion trigger condition is met.

Alternatively, the UE in the idle state or the inactive state may further report the measurement result of the positioning reference signal to the location management device (such as the LMF or the LMC) by using a preconfigured resource in the idle state or the inactive state. The preconfigured resource may be broadcast by using a system message, or may be delivered by using RRC dedicated signaling. Alternatively, the UE may report the measurement result of the positioning reference signal in another early data transmission manner or by using another transmission resource in the idle state or the inactive state. A method used by the UE in the idle state or the inactive state to report the measurement result of the positioning reference signal is not specifically limited in this embodiment of this application.

(2) The UE enters the connected state from the idle state or the inactive state. The UE in the connected state reports the measurement result of the positioning reference signal to the location management device (such as the LMF or the LMC).

That the UE enters the connected state from the idle state may specifically include: The UE sets up an RRC connection to an access network device (such as an ng-eNB or a gNB), and the UE sets up a connection to the access and mobility management device (such as the AMF) through the access network device (such as the ng-eNB or the gNB).

That the UE enters the connected state from the inactive state may specifically include: The UE sets up the RRC connection to the access network device (such as the ng-eNB or the gNB).

If the UE determines that the UE is in the connected state when the UE meets the foregoing motion trigger condition, S503 may include: The UE in the connected state reports the measurement result of the positioning reference signal to the location management device (such as the LMF or the LMC).

In another optional implementation, when the location management device (such as the LMC) is located in an NG-RAN node (node) (as shown in FIG. 1(b), in FIG. 1(c), or in FIG. 1(d)), the UE enters the connected state by initiating random access, and indicates, to the access network device (such as the ng-eNB, the gNB, or a TRP) by using an RRC connection setup complete (RRCSetupComplete) message, that the UE has a location measurement result. The access network device (such as the ng-eNB, the gNB, or the TRP) requests the location measurement result from the UE based on a received indication from the UE. Then, the UE sends the measurement result of the positioning reference signal to the access network device (such as the ng-eNB, the gNB, or the TRP). The access network device (such as the ng-eNB, the gNB, or the TRP) then forwards the location measurement result to the location management device (such as the LMC).

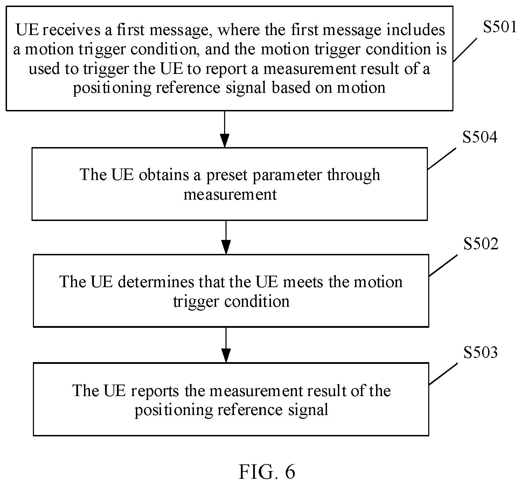

Further, as shown in FIG. 6, before step S502, the UE location information reporting method provided in this embodiment of this application may further include S504.

S504: The UE obtains the preset parameter through measurement.

In this embodiment of this application, the UE may periodically obtain the preset parameter through measurement, or obtain the preset parameter (such as the location parameter, the motion parameter, or the received signal parameter) in a second preset time period and store the obtained preset parameter. When the change value of the preset parameter is greater than the preset threshold, the UE determines that the UE meets the motion trigger condition.

Specifically, the UE may obtain the preset parameter through measurement based on the preset measurement periodicity (such as every second/every 30 seconds/every minute/every hour) or the second preset time period (such as 8:00 to 9:00 in the morning and 12:00 to 12:30 at noon) in a preset measurement manner. The measurement manner may include but is not limited to one or more of sensor measurement, satellite measurement, or signal receiving apparatus measurement. For example, the motion parameter of the UE, such as a moving direction and distance of the UE, and a flipping direction and angle of the UE, may be obtained in a sensor measurement manner. The location parameter of the UE, such as latitude and longitude of the UE, may be obtained in a satellite measurement manner. The received signal parameter of the UE, such as RSRP, RSRQ, an RSTD, NRSRP, or NRSRQ of a network environment in which the UE is located, may be obtained in a signal receiving apparatus measurement manner.

It may be understood that regardless of whether a change value of the motion parameter of the UE is greater than the preset threshold, a change value of the location parameter of the UE is greater than the preset threshold, or a change value of the received signal parameter is greater than the preset threshold, the change value of the received signal parameter is essentially a result of motion of the UE or a result of a location change of the UE. When the UE moves or a location of the UE changes, the UE is triggered to report the measurement result of the reference signal. This is very necessary for the location management device (such as the LMF or the LMC) to locate the UE.

It should be noted that the sensor measurement, the satellite measurement, or the signal receiving apparatus measurement are merely used as examples of three possible preset parameter measurement manners, and the UE may alternatively determine, in another measurement manner, that the UE moves or the location of the UE changes. A specific measurement manner is not specifically limited in this embodiment of this application.

Optionally, the measurement manner and/or the measurement periodicity may be indicated by the location management device. For example, the first message may further include one or more of measurement manner indication information, the measurement periodicity (such as every second/every 30 seconds/every minute/every hour), or the second preset time period (such as 8:00 to 9:00 in the morning and 12:00 to 12:30 at noon).

The measurement manner indication information is used to indicate a measurement manner of the preset parameter. For example, the measurement manner may include one or more of the sensor measurement, the satellite measurement, the signal receiving apparatus measurement, or the like. Measurement periodicity indication information is used to indicate a measurement periodicity of the preset parameter.

When the first message includes the measurement manner and the measurement periodicity, S504 includes: The UE obtains the preset parameter through measurement based on the measurement periodicity indicated by the measurement periodicity indication information included in the first message and in the measurement manner indicated by the measurement manner indication information.

Optionally, the measurement manner indication information may include each measurement manner and status indication information of the measurement manner.

The status indication information of the measurement manner may include TRUE/FALSE. Status indication information of a measurement manner is TRUE, indicating that the UE can measure the preset parameter in the measurement manner. Status indication information of a measurement manner is FALSE, indicating that the UE cannot measure the preset parameter in the measurement manner. For example, status indication information of the sensor measurement manner is TRUE, indicating that the UE can measure the preset parameter (such as the motion parameter) in the sensor measurement manner.

Optionally, the preset threshold may alternatively be indicated by the location management device. For example, the first message may further include the preset threshold.

Specifically, different preset parameters may correspond to different preset thresholds. For example, a preset threshold corresponding to the motion parameter may be any constant greater than or equal to 0. A preset threshold corresponding to the received signal parameter may be any constant greater than 0. A preset threshold corresponding to the location parameter may be preset longitude and latitude bounds. A specific setting of the preset threshold is not limited in this embodiment of this application.

Further, the first message may further include at least one of a periodical reporting indication, a preset time period reporting indication (Reportingduration), or a serving cell change trigger indication (Cellchange). The periodical reporting indication is used to indicate the UE to periodically report the measurement result of the positioning reference signal. The preset time period reporting indication is used to indicate the UE to report the measurement result of the positioning reference signal in the first preset time period. The serving cell change trigger indication (Cellchange) is used to trigger the UE to report, when a primary serving cell changes, the measurement result of the positioning reference signal. The UE may select, based on an actual status of the UE, an appropriate reporting trigger manner to report the measurement result of the reference signal. For example, when determining that the motion trigger condition is met, the UE in the connected state may report the measurement result of the reference signal based on the motion trigger condition, periodically report the measurement result of the reference signal, report the measurement result of the reference signal in a preset time period, or report the measurement result of the reference signal based on a change of a serving cell. For example, for the UE in the idle state/inactive state, to save power, the measurement result of the reference signal may be reported when the motion trigger condition is met or when the serving cell changes.

It should be understood that the UE location information reporting method provided in this embodiment of this application may be performed based on a long term evolution positioning protocol (long term evolution position protocol, LPP) or a positioning protocol of another NG communication system.

Information exchanged in the LPP-based UE location information reporting method may mainly include (a) to (f).
(a) A request capability (Request Capabilities) is mainly used by the location management device (such as the LMF) to request capability information of the UE from the UE.

The capability information of the UE is used to indicate at least a locating mode type supported by the UE and/or a positioning reference signal measurement capability.

For example, the locating mode type supported by the UE may include but is not limited to one or more of a PRS-based locating mode, an SRS-based locating mode, a CSI-based locating mode, or an SSB-based locating mode.

The positioning reference signal measurement capability of the UE may include but is not limited to information types that may be obtained by the UE by measuring the positioning reference signal in different locating modes. For example, the positioning reference signal measurement capability of the UE may include: The UE may obtain, but not limited to, capability indication information of one or more of the RSRP, the RSRQ, the RSTD, the NRSRP, or the NRSRQ by measuring the PRS. Further, for UE with a strong computing capability, the positioning reference signal measurement capability of the UE may include: The UE may obtain capability indication information of preliminary location information of the UE through calculation by measuring the positioning reference signal.

(b) A provide capability (Provide Capabilities) is mainly used by the UE to provide the capability information of the UE to the location management device (such as the LMF).

(c) Request assistance data (Request Assistance Data) is mainly used by the UE to request assistance information from the location management device (such as the LMF).

The assistance information may include but is not limited to one or more of cell indexes of a neighboring cell and a reference cell, a PRS configuration, or the like. For example, the PRS configuration may include a preset measurement periodicity of the PRS or a preset measurement time period of the PRS.

(d) Provide assistance data (Provide Assistance Data) is mainly used by the location management device (such as the LMF) to provide the assistance information for the UE.

(e) Request location information (Request Location Information) is mainly used by the location management device (such as the LMF) to request location information from the UE.

(f) Provide location information (Provide Location Information) is mainly used by the UE to provide the location information for the location management device (such as the LMF).

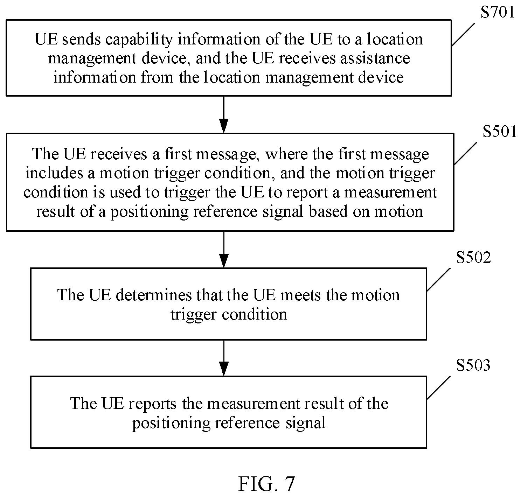

Therefore, further, as shown in FIG. 7, before S501, the user equipment location information reporting method provided in this embodiment of this application may further include the following step.

S701: The UE sends the capability information of the UE to the location management device. The UE receives the assistance information from the location management device.

It may be understood that in this embodiment of this application, the UE may report, based on an indication of the location management device (such as the LMF or the LMC), the measurement result obtained by the UE by measuring the plurality of positioning reference signals when the UE moves. The location management device (such as the LMF or the LMC) may determine the location of the UE based on the measurement result reported by the UE. In this manner, a problem of excessive power consumption and a waste of link resources that are caused by a fact that the UE in the idle state or the inactive state needs to periodically enter the connected state to report the measurement result of the reference signals can be resolved.

For ease of understanding, in the following embodiments of this application, an example in which a location management device is an LMF, an access and mobility management device is an AMF, an access network device is an NG-RAN, and a location service entity is a 5GC LCS entity is used to describe an LPP protocol-based UE location information reporting method.

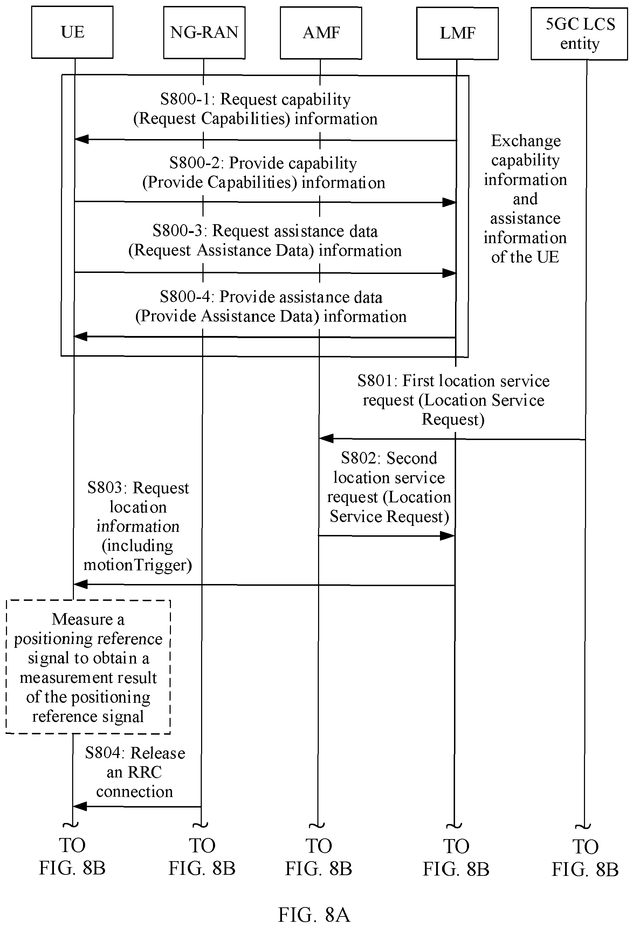

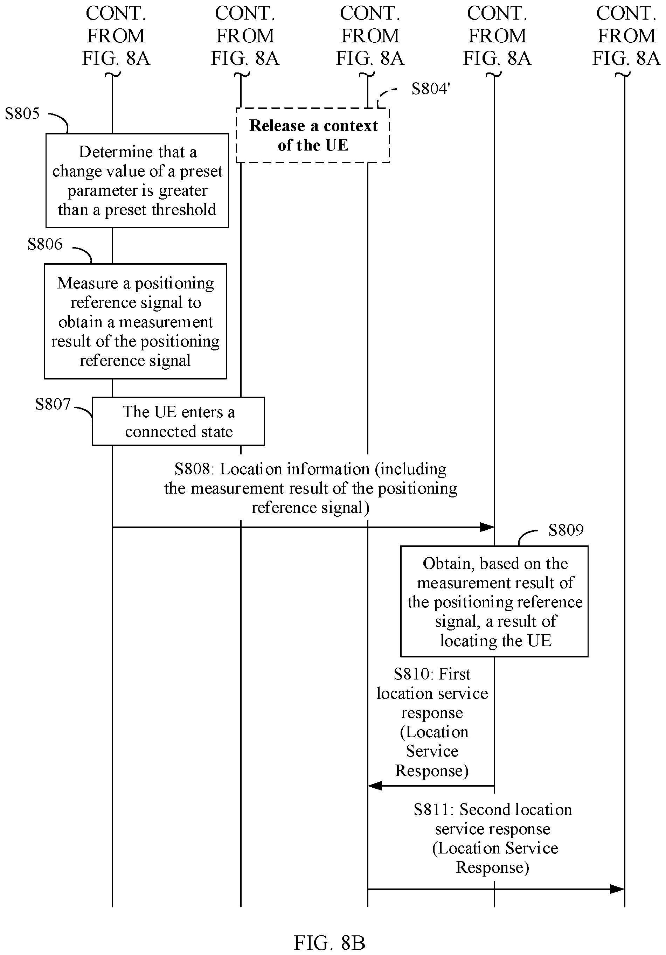

FIG. 8A and FIG. 8B are an interaction diagram 1 of a UE location information reporting method according to an embodiment of this application. As shown in FIG. 8A and FIG. 8B, the UE location information reporting method provided in this embodiment of this application may include the following steps.

S801: A 5GC LCS entity sends a first location service request (Location Service Request) to an AMF. The first location service request is used to request to trigger locating of UE.

The 5GC LCS entity may be an application program or a client, or may be another entity that has a location service requirement, for example, an emergency call (emergency call). The 5GC LCS entity and a specific location service are not specifically limited in this embodiment of this application.

S802: The AMF sends a second location service request (Location Service Request) to an LMF. The second location service request is used to request to locate the UE.

S803: The LMF sends request location information to the UE. The request location information includes a motion trigger condition. The motion trigger condition is used to trigger the UE to report a measurement result of a positioning reference signal based on motion.

The request location information (RequestLocationInformation) may include a motion trigger indication (such as motionTrigger or movingTrigger). For example, the motion trigger indication may be included in a request location CommonIEsRequestLocationInformation information element IE of the request location information (RequestLocationInformation). The motion trigger indication is used to indicate the UE to report the measurement result of the positioning reference signal based on motion. For example, the motion trigger indication (such as motionTrigger or movingTrigger) may be included in a triggered reporting TriggeredReportingCriteria IE of the request location information (RequestLocationInformation).

Further, the request location information (RequestLocationInformation) may further include at least one of a periodical reporting indication, a preset time period reporting indication (ReportingDuration), or a serving cell change trigger indication (Cellchange). The periodical reporting indication is used to indicate the UE to periodically report the measurement result of the positioning reference signal. The preset time period reporting indication is used to indicate the UE to report the measurement result of the positioning reference signal in a first preset time period. The serving cell change trigger indication (Cellchange) is used to trigger the UE to report, when a primary serving cell changes, the measurement result of the positioning reference signal.

For example, the request location information (RequestLocationInformation) may include the following content:

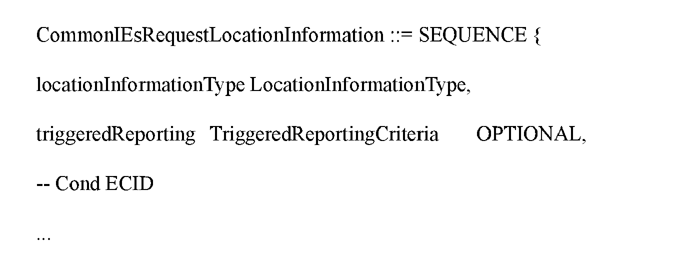

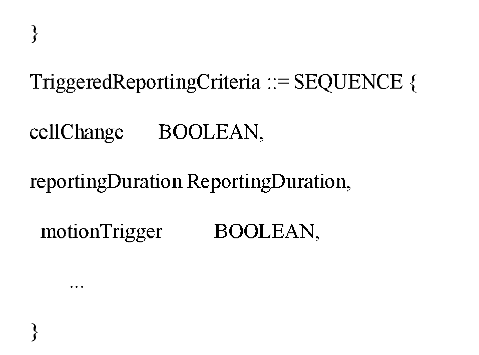

}It should be noted that an existence form of the motion trigger indication (such as motionTrigger) in the request location information (RequestLocationInformation) is merely used as an example. This is not limited in this embodiment of this application. For example, the motion trigger indication (such as motionTrigger) may alternatively be included in the request location information (RequestLocationInformation) in another form, or the motion trigger indication may be included in the request location information (RequestLocationInformation) in another name.

S804: An NG-RAN releases an RRC connection to the UE.

In one case, after the NG-RAN releases the RRC connection to the UE, the UE enters an inactive state.

In another case, as shown in step S804' in FIG. 8A and FIG. 8B, after the NG-RAN releases the RRC connection to the UE, the NG-RAN may further release a context of the UE. In this case, the UE enters an idle state.

For a specific process in which the NG-RAN releases the RRC connection to the UE and the NG-RAN releases the context of the UE, refer to explanations and descriptions in a conventional technology. Details are not described herein.

S805: The UE determines that a change value of a preset parameter is greater than a preset threshold.

The preset threshold may be 0, or may be any constant greater than 0. In other words, in this embodiment of this application, the UE may be triggered to report the measurement result of the reference signal based on motion of the UE, motion of the UE beyond a specific range, or the like.

S806: The UE measures the positioning reference signal to obtain the measurement result of the positioning reference signal.

The positioning reference signal may include but is not limited to one or more of a PRS, an SRS, CSI, or an SSB. The measurement result of the positioning reference signal may include but is not limited to one or more of RSRP, RSRQ, an RSTD, NRSRP, or NRSRQ.

It should be noted that step S806 may be performed after step S805. In this case, the UE may trigger measurement on the positioning reference signal based on the request location information (RequestLocationInformation) from the LMF when determining that the change value of the preset parameter is greater than the preset threshold.

In addition, optionally, in this embodiment of this application, before step S804, the UE may measure the positioning reference signal to obtain the measurement result of the positioning reference signal, as shown in FIG. 8A and FIG. 8B. Specifically, the UE may periodically measure the positioning reference signal based on a preset measurement periodicity to obtain the measurement result of the positioning reference signal. Alternatively, the UE may measure the positioning reference signal in a preset time period to obtain the measurement result of the positioning reference signal. Alternatively, the positioning reference signal is measured according to another rule. This is not limited in this embodiment of this application.

S807: The UE enters a connected state.

In one case, if the UE is in the inactive state before performing step S807, because the NG-RAN stores the context of the UE in the inactive state, the UE may quickly resume the RRC connection to the NG-RAN, and enter the connected state.

In another case, if the UE is in the idle state before performing step S807, the UE needs to set up the RRC connection to the NG-RAN again. In addition, the NG-RAN needs to set up a connection to the AMF. Then, the UE enters the connected state.

For a process in which the UE enters the connected state from the inactive state or the idle state, refer to explanations and descriptions in a conventional technology. Details are not described herein.

S808: The UE reports location information to the LMF. The location information includes the measurement result of the positioning reference signal.

For example, the UE may report the location information to the LMF by using provide location information (ProvideLocationInformation) in an LPP message.

The measurement result of the positioning reference signal that is reported by the UE to the LMF may include the measurement result of the positioning reference signal that is obtained by the UE by measuring the positioning reference signal in step S806 and/or a measurement result of a positioning reference signal that is obtained by the UE by measuring the positioning reference signal before step S804.

To be specific, if the UE does not measure the positioning reference signal before step S804, the location information reported by the UE to the LMF in step S808 includes only the measurement result of the positioning reference signal that is obtained by the UE by measuring the positioning reference signal in S806.

If the UE measures the positioning reference signal before step S804 to obtain the measurement result of the positioning reference signal, the UE may not perform step S806. In this case, the location information reported by the UE to the LMF in step S808 includes only the measurement result of the positioning reference signal that is obtained by the UE by measuring the positioning reference signal before step S804. Alternatively, the UE may perform step S806. In this case, the location information reported by the UE to the LMF in step S808 includes both the measurement result of the positioning reference signal that is obtained by the UE by measuring the positioning reference signal in step S806 and the measurement result of the positioning reference signal that is obtained by the UE by measuring the positioning reference signal before step S804.

If the measurement result of the positioning reference signal that is reported by the UE to the LMF includes the measurement result of the positioning reference signal that is obtained by the UE by measuring the positioning reference signal in step S806 and the measurement result of the positioning reference signal that is obtained by the UE by measuring (for example, periodically measuring or measuring in a preset time period) the positioning reference signal before step S804, the LMF may draw a movement track of the UE based on measurement results at different moments. The drawing of the movement track of the UE may be used in some special application scenarios, for example, drawing a travel record for a user in a travel client.

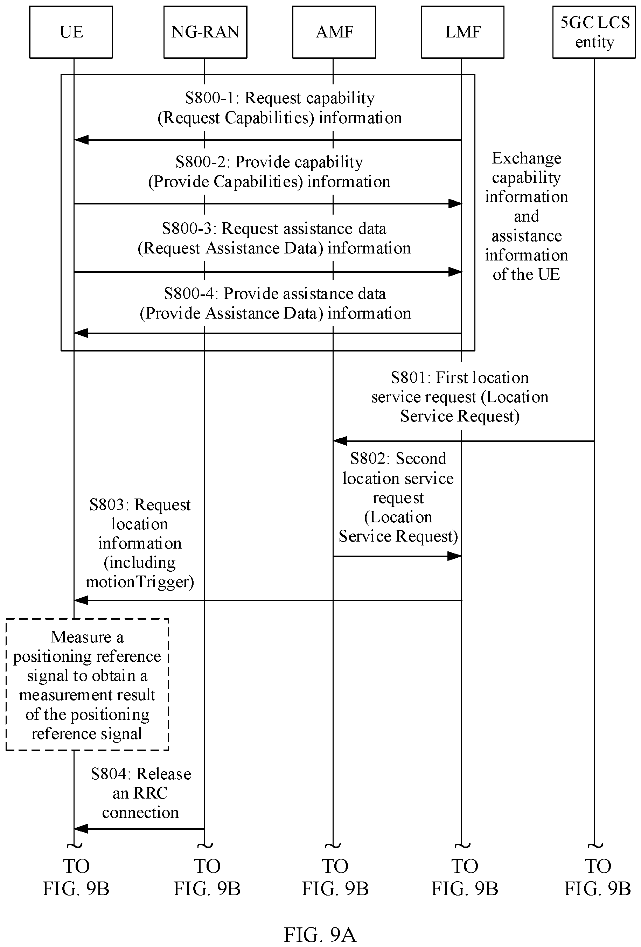

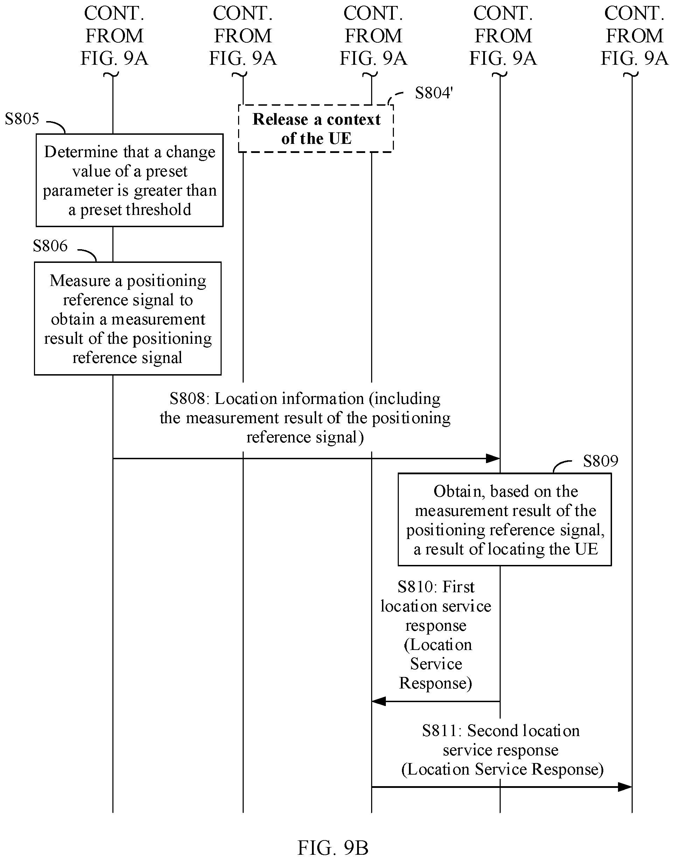

Optionally, the UE in the idle state or the inactive state may further report the location information to the LMF. As shown in FIG. 9A and FIG. 9B, after performing step S805 and obtaining the measurement result of the positioning reference signal, the UE may not perform step S807, and may further directly perform step S808. Specifically, the UE may report the measurement result of the positioning reference signal in an early data transmission manner such as EDT or a preconfigured resource in the idle state or the inactive state.

S809: The LMF obtains, based on the measurement result of the positioning reference signal, a result of locating the UE.

S810: The LMF sends a first location service response (Location Service Response) to the AMF.

The first location service response includes the result of locating the UE by the LMF.

S811: The AMF sends a second location service response (Location Service Response) to the 5GC LCS entity.

The second location service response includes the result of locating the UE by the LMF.

Further, before performing S801, the UE may further exchange capability information and assistance information of the UE with the LMF. Specifically, as shown in FIG. 8A and FIG. 8B and FIG. 9A and FIG. 9B, the UE location information reporting method provided in this embodiment of this application further includes the following steps.

S800-1: The LMF sends request capability (Request Capabilities) information to the UE, to request the capability information of the UE.

The capability information of the UE is used to indicate at least a locating mode type supported by the UE and/or a positioning reference signal measurement capability.

For example, the locating mode type supported by the UE may include but is not limited to one or more of a PRS-based locating mode, an SRS-based locating mode, a CSI-based locating mode, or an SSB-based locating mode.

The positioning reference signal measurement capability of the UE may include but is not limited to information types that may be obtained by the UE by measuring the positioning reference signal in different locating modes. For example, the positioning reference signal measurement capability of the UE may include: The UE may obtain, but not limited to, capability indication information of one or more of the RSRP, the RSRQ, the RSTD, the NRSRP, or the NRSRQ by measuring the PRS. Further, for UE with a strong computing capability, the positioning reference signal measurement capability of the UE may include: The UE may obtain capability indication information of preliminary location information of the UE through calculation by measuring the positioning reference signal.

S800-2: The UE sends provide capability (Provide Capabilities) information to the LMF, where the provide capability information includes the capability information of the UE.

S800-3: The UE sends request assistance data (Request Assistance Data) information to the LMF, to request the assistance information.

The assistance information may include but is not limited to one or more of cell indexes of a neighboring cell and a reference cell, a PRS configuration, or the like. For example, the PRS configuration may include a preset measurement periodicity of the PRS, or a preset time period of the PRS.

S800-4: The LMF sends provide assistance data (Provide Assistance Data) information to the UE, where the provide assistance data information includes the assistance information.

It should be noted that in FIG. 8A and FIG. 8B and FIG. 9A and FIG. 9B, an example in which a 5GC LCS entity triggers locating of the UE is used to describe the UE location information reporting method provided in this embodiment of this application. Actually, locating of the UE may be triggered by the AMF, or may be triggered by the LMF.

If locating of the UE is triggered by the AMF, a difference from locating of the UE triggered by the 5GC LCS entity lies in that the LMF sends the request location information to the UE based on the first location service request (location service request) triggered by the AMF and the AMF does not need to send a response message to the 5GC LCS entity after receiving, from the LMF, the result of locating the UE obtained by the LMF based on the measurement result of the positioning reference signal that is reported by the UE.

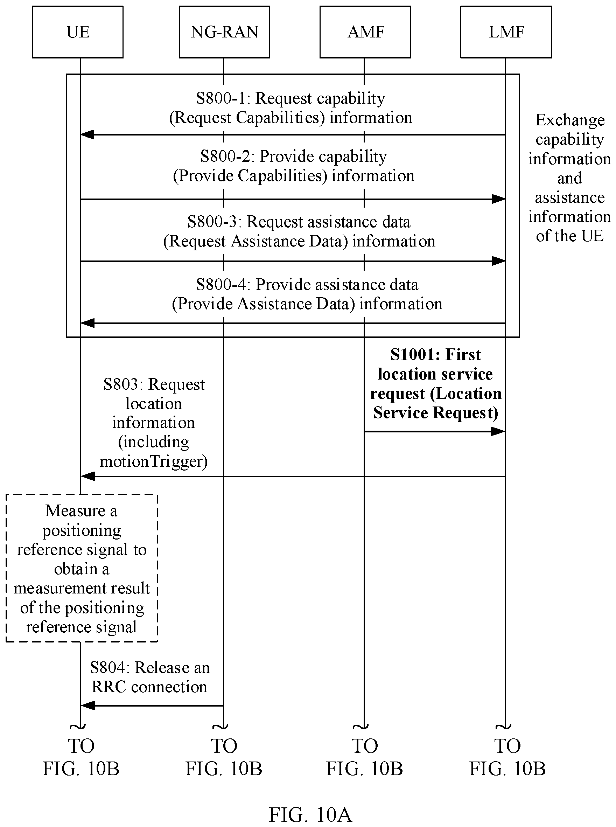

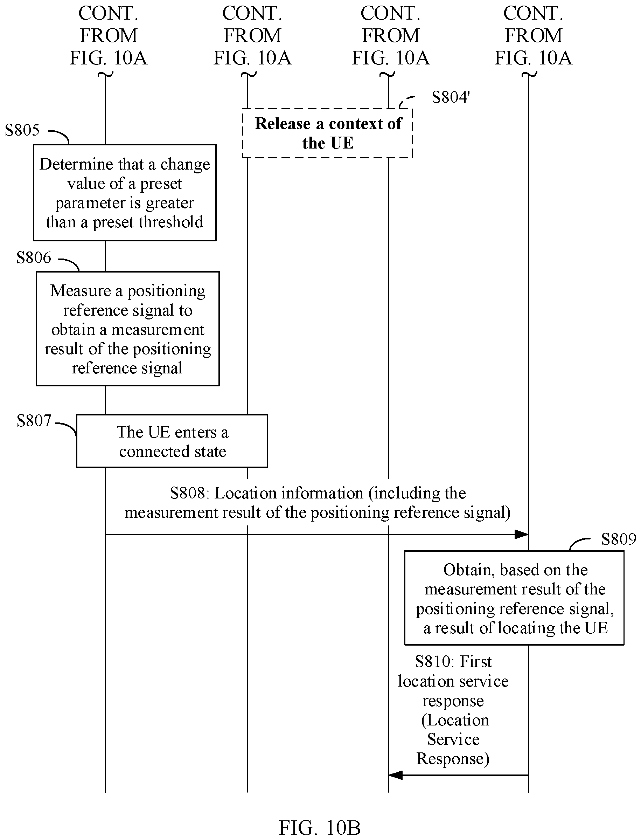

Specifically, if locating of the UE is triggered by the AMF, the UE may report the location information after entering the connected state from the inactive state or the idle state. As shown in FIG. 10A and FIG. 10B, a UE location information reporting method provided in an embodiment of this application may include the following phases.

Phase 1: Exchange capability information and assistance information of UE. Specifically, the phase 1 includes steps S800-1, S800-2, S800-3, and S800-4.

Phase 2: Send request location information (such as motionTrigger or movingTrigger). Specifically, the phase 2 includes steps S1001 and S803.

Phase 3: a phase in which whether to perform reporting is determined after an RRC connection is released. Specifically, the phase 3 includes steps S804 (S804, or S804 and S804'), S805, and S806.

Phase 4: a location information reporting and location service response phase. Specifically, the phase 4 includes steps S807, S808, S809, and S810.

S1001: The UE sends a first location service request (location service request) to an LMF. The first location service request is used to request to trigger locating of the UE.

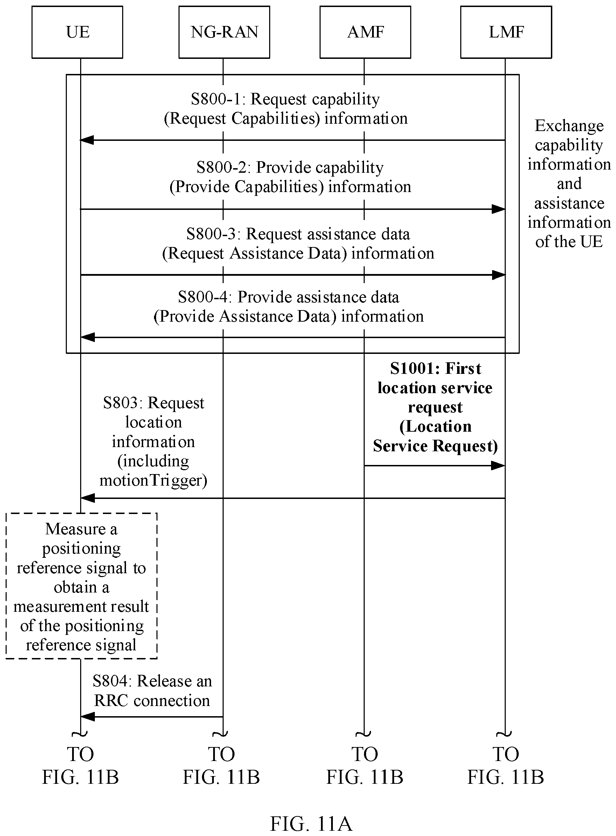

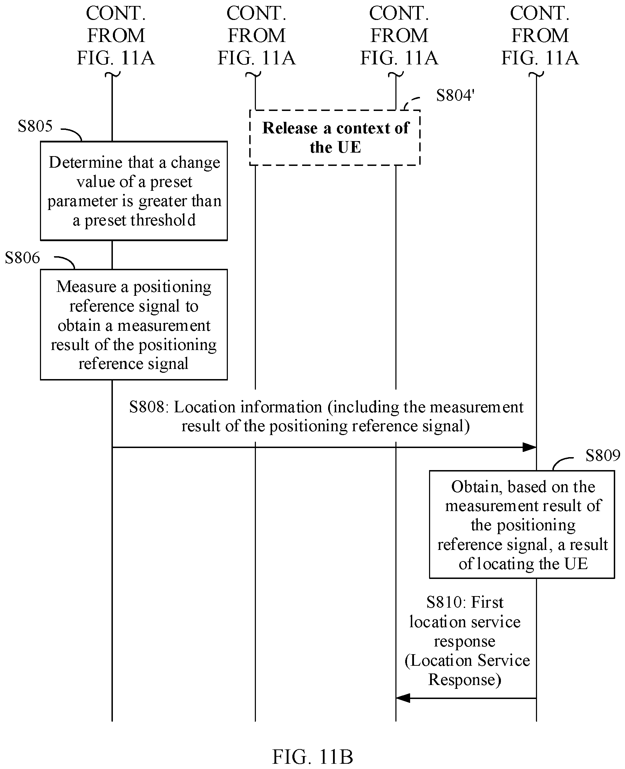

Alternatively, if locating of the UE is triggered by an AMF, the UE in an inactive state or an idle state may report location information. As shown in FIG. 11A and FIG. 11B, a UE location information reporting method provided in an embodiment of this application may include the following phases.

Phase 1: Exchange capability information and assistance information of UE. Specifically, the phase 1 includes steps S800-1, S800-2, S800-3, and S800-4.

Phase 2: Send request location information (such as motionTrigger or movingTrigger). Specifically, the phase 2 includes steps S1001 and S803.

Phase 3: Enter a phase in which whether to perform reporting is determined after an RRC connection is released. Specifically, the phase 3 includes steps S804 (S804, or S804 and S804'), S805, and S806.

Phase 4: Enter a location information reporting and location service response phase. Specifically, the phase 4 includes steps S808, S809, and S810.

If locating of the UE is triggered by an LMF, a difference from locating of the UE by an AMF lies in that the LMF autonomously triggers to send the request location information to the UE and the LMF does not need to send a response message to the AMF after obtaining, based on a measurement result of a positioning reference signal that is reported by the UE, a result of locating the UE.

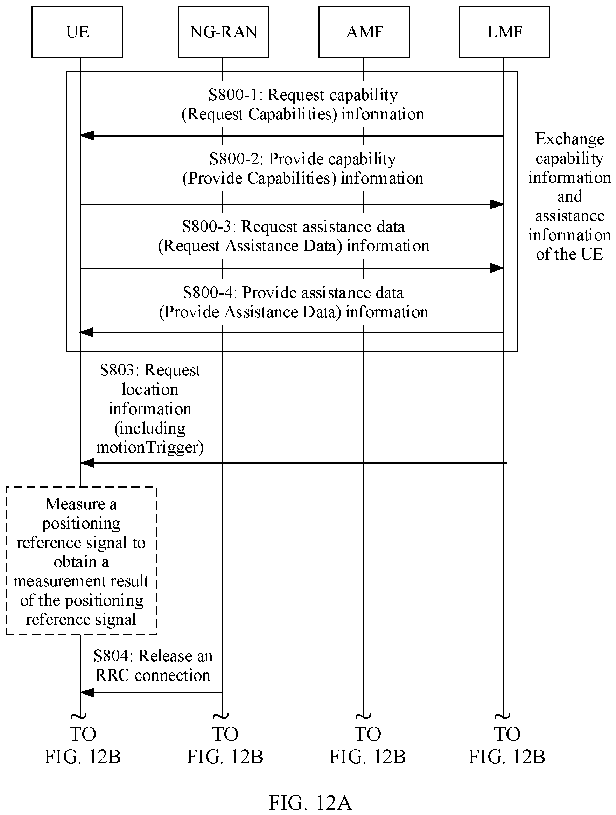

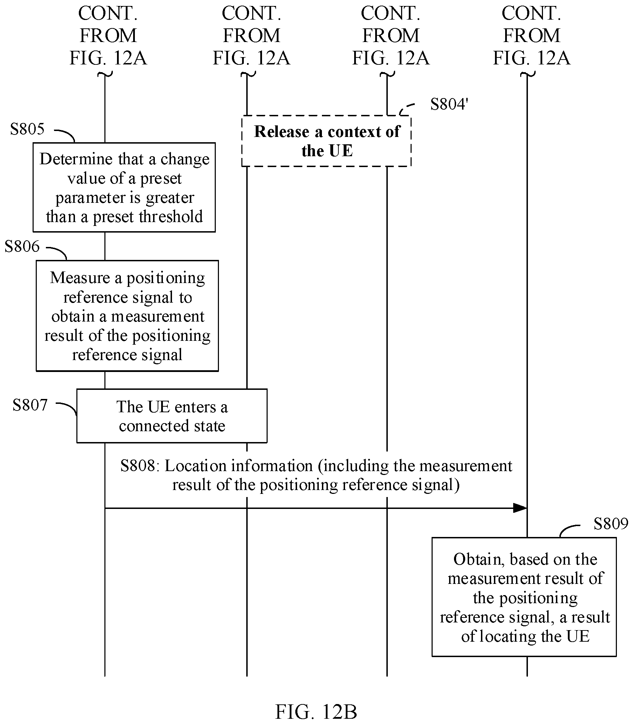

Specifically, if locating of the UE is triggered by the LMF, the UE may report location information after entering a connected state from an inactive state or an idle state. As shown in FIG. 12A and FIG. 12B, a UE location information reporting method provided in an embodiment of this application may include the following phases.

Phase 1: Exchange capability information and assistance information of UE. Specifically, the phase 1 includes steps S800-1, S800-2, S800-3, and S800-4.

Phase 2: Send request location information (such as motionTrigger or movingTrigger). Specifically, the phase 2 includes step S803.

Phase 3: Enter a phase in which whether to perform reporting is determined after an RRC connection is released. Specifically, the phase 3 includes steps S804 (S804, or S804 and S804'), S805, and S806.

Phase 4: Enter a location information reporting and location service response phase. Specifically, the phase 4 includes steps S807, S808, and S809.

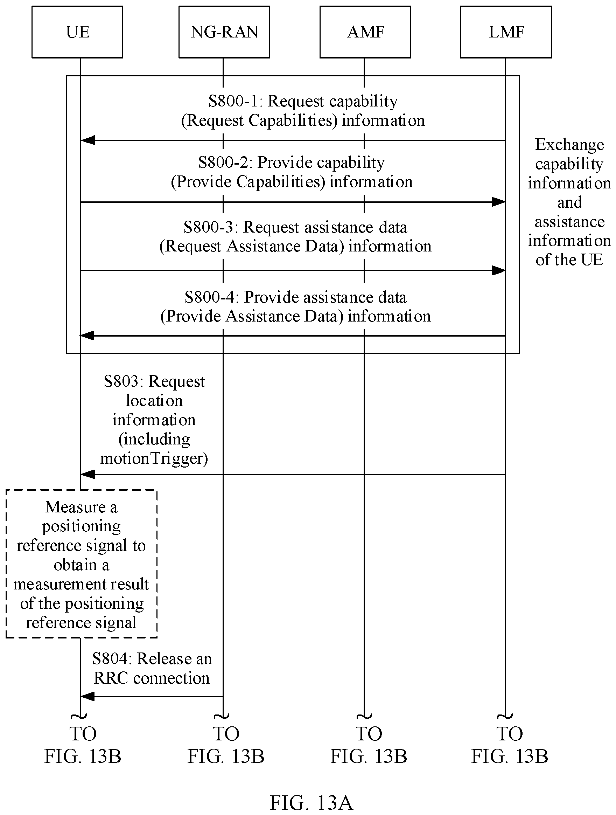

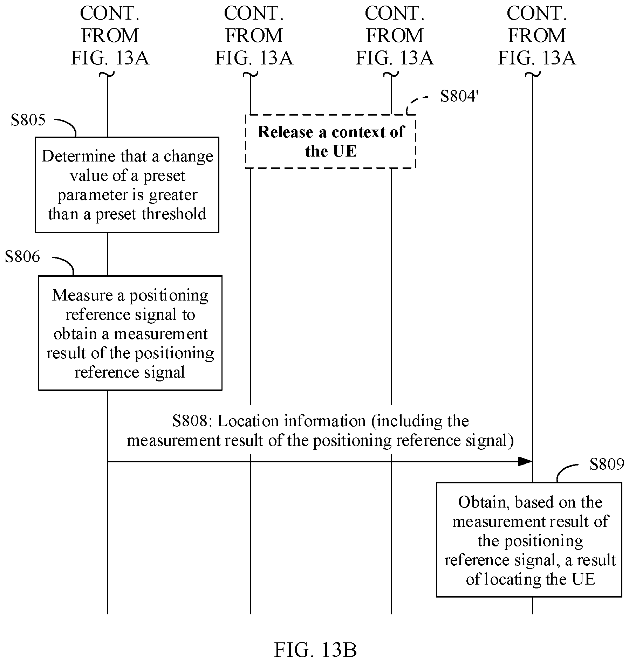

Alternatively, if locating of the UE is triggered by an LMF, the UE in an inactive state or an idle state may report location information. As shown in FIG. 13A and FIG. 13B, a UE location information reporting method provided in an embodiment of this application may include the following phases.

Phase 1: Exchange capability information and assistance information of UE. Specifically, the phase 1 includes S800-1, S800-2, S800-3, and S800-4.

Phase 2: Send request location information (such as motionTrigger or movingTrigger). Specifically, the phase 2 includes S803.

Phase 3: Enter a phase in which whether to perform reporting is determined after an RRC connection is released. Specifically, the phase 3 includes S804 (S804, or S804 and S804'), S805, and S806.

Phase 4: Enter a location information reporting and location service response phase. Specifically, the phase 4 includes S808 and S809.

It should be noted that for specific execution details of the steps in FIG. 10A and FIG. 10B, FIG. 11A and FIG. 11B, FIG. 12A and FIG. 12B, and FIG. 13A and FIG. 13B, refer to explanations and descriptions of FIG. 8A and FIG. 8B and FIG. 9A and FIG. 9B in embodiments of this application. Details are not described herein again.

It may be understood that in this application, the UE may report, based on an indication of the location management device (such as the LMF or the LMC), the measurement result obtained by the UE by measuring the plurality of positioning reference signals when determining that the UE moves. The location management device (such as the LMF or the LMC) may determine the location of the UE based on the measurement result reported by the UE. According to the user equipment location information reporting method provided in this application, a problem of excessive power consumption and a waste of link resources that are caused by a fact that the UE in the idle state or the inactive state needs to periodically enter the connected state to report the measurement result of the reference signals can be resolved. The location management device (such as the LMF or the LMC) may include, in the request location information, the motion trigger condition (such as motionTrigger) used to trigger the UE to report the measurement result of the positioning reference signal based on the motion.

It may be understood that, to implement functions of any one of the foregoing embodiments, network elements such as user equipment UE and a location management device (such as an LMF) include corresponding hardware structures and/or software modules for performing the functions. A person skilled in the art should easily be aware that, in combination with the units and algorithm steps in the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, functional modules of the user equipment UE and the location management device (such as the LMF) may be obtained through division. For example, each functional module may be obtained through division based on a corresponding function, or two or more functions may be integrated into one processing module. The integrated module may be implemented in a form of hardware, or may be implemented in a form of a software functional module. It should be noted that in embodiments of this application, division into the modules is an example, and is merely logical function division. During actual implementation, there may be another division manner.

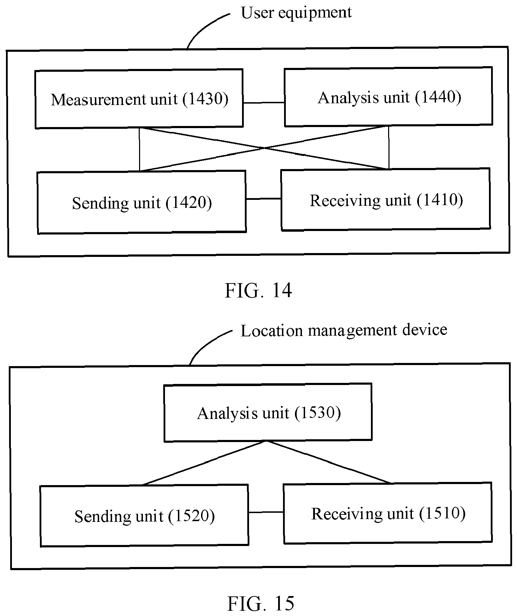

For example, when each functional module is obtained through division in an integrated manner, FIG. 14 is a schematic diagram of a structure of user equipment according to an embodiment of this application. The user equipment may include a receiving unit 1410, a sending unit 1420, a measurement unit 1430, and an analysis unit 1440.

The receiving unit 1410 is configured to support the user equipment in performing any one of step S501, S800-1, S800-4, S803, or S804, and/or is configured to perform another process of the technology described in this specification. The sending unit 1420 supports the user equipment in performing any one of step S503, S701, S800-2, S800-3, or S808, and/or is configured to perform another process of the technology described in this specification. The measurement unit 1430 is configured to support the user equipment in performing the foregoing step S504 or S806 and the user equipment in measuring a positioning reference signal at other time according to any rule, and/or is configured to perform another process of the technology described in this specification. The analysis unit 1440 is configured to support the user equipment in performing the foregoing step S502, and/or is configured to perform another process of the technology described in this specification.

In addition, in some cases, the receiving unit 1410 and the sending unit 1420 are further configured to assist in performing step S807, so that the UE enters a connected state. For example, the UE may send a random access request to an NG-RAN through the sending unit 1420, receive a random access request response from the NG-RAN through the receiving unit 1410, and the like.

FIG. 15 is a schematic diagram of a structure of a location management device according to an embodiment of this application. The location management device may include a receiving unit 1510, a sending unit 1520, and an analysis unit 1530.

The sending unit 1520 is configured to support the location management device in performing any one of step S800-1, S800-4, S803, or S810, and/or is configured to perform another process of the technology described in this specification. The receiving unit 1510 is configured to support the location management device in performing any one of step S800-2, S800-3, S802, S808, or S1001, and/or is configured to perform another process of the technology described in this specification. The analysis unit 1530 is configured to support the location management device in performing the foregoing step S809, and/or is configured to perform another process of the technology described in this specification.

It should be noted that, all related content of each step in the foregoing method embodiments may be cited in function descriptions of a corresponding functional module. Details are not described herein again.

It should be noted that the sending unit 1420, the sending unit 1520, the receiving unit 1410, and the receiving unit 1510 each may include a radio frequency circuit. Specifically, a network element may receive and send a radio signal through the radio frequency circuit. The radio frequency circuit usually includes but is not limited to an antenna, at least one amplifier, a transceiver, a coupler, a low noise amplifier, a duplexer, and the like. In addition, the radio frequency circuit may further communicate with another device through wireless communication. The wireless communication may use any communication standard or protocol, including but not limited to a global system for mobile communications, a general packet radio service, code division multiple access, wideband code division multiple access, long term evolution, an e-mail message, an SMS message service, and the like.

In an optional manner, when software is used to implement data transmission, the data transmission may be implemented completely or partially in a form of a computer program product. The computer program product includes one or more computer instructions. When the computer program instructions are loaded and executed on a computer, the procedure or functions according to embodiments of this application are all or partially implemented. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (such as a coaxial cable, an optical fiber, or a digital subscriber line (DSL)) or wireless (such as infrared, radio, or microwave) manner. The computer-readable storage medium may be any usable medium accessible to the computer, or a data storage device, such as a server or a data center, integrating one or more usable media. The usable medium may be a magnetic medium (such as a floppy disk, a hard disk, or a magnetic tape), an optical medium (such as a DVD), a semiconductor medium (such as a solid state disk Solid State Disk (SSD)), or the like.

Method or algorithm steps described in combination with embodiments of this application may be implemented by hardware, or may be implemented by a processor by executing software instructions. The software instructions may include a corresponding software module. The software module may be stored in a RAM memory, a flash memory, a ROM memory, an EPROM memory, an EEPROM memory, a register, a hard disk, a removable hard disk, a CD-ROM memory, or a storage medium in any other form well-known in the art. For example, a storage medium is coupled to the processor, so that the processor can read information from the storage medium or write information into the storage medium. Certainly, the storage medium may be a component of the processor. The processor and the storage medium may be located in an ASIC. In addition, the ASIC may be located in a detection apparatus. Certainly, the processor and the storage medium may alternatively exist in the detection apparatus as discrete components.

Based on the foregoing descriptions of the implementations, a person skilled in the art may clearly understand that for the purpose of convenient and brief descriptions, division into the foregoing functional modules is merely used as an example for description. During actual application, the foregoing functions can be allocated to different functional modules for implementation based on a requirement, that is, an inner structure of an apparatus is divided into different functional modules to implement all or some of the functions described above.

In an optional manner, this application provides a communication system. The communication system includes user equipment, a location management device, an access and mobility management device, and another network element related to a downlink locating process. The communication system is configured to implement the user equipment location information reporting method in any possible implementation provided in this application.

In an optional manner, this application provides a chip system. The chip system includes a processor and a memory. The memory stores instructions. When the instructions are executed by the processor, the user equipment location information reporting method in any possible implementation provided in this application is implemented. The chip system may include a chip, or may include a chip and another discrete component.

In the several embodiments provided in this application, it should be understood that the disclosed user equipment and method may be implemented in other manners. For example, the described apparatus embodiments are merely examples. For example, division into the modules or units is merely logical function division. During actual implementation, there may be another division manner. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or the units may be implemented in electrical, mechanical, or other forms.

The units described as separate components may or may not be physically separate, and components displayed as units may be one or more physical units, that is, may be located in one place, or may be distributed on a plurality of different places. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of embodiments of this application essentially, the part contributing to the conventional technology, or all or some of the technical solutions may be implemented in a form of a software product. The software product is stored in a storage medium and includes several instructions for enabling a device (which may be a single-chip microcomputer, a chip, or the like) or a processor (processor) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A user equipment location information reporting method, wherein the method comprises:
receiving, by a user equipment, a first message, wherein the first message comprises a motion trigger condition, and the motion trigger condition is used to trigger the user equipment to report a measurement result of a positioning reference signal based on motion;
determining, by the user equipment, that the user equipment meets the motion trigger condition; and
reporting, by the user equipment, the measurement result of the positioning reference signal.

2. The method according to claim 1, wherein the determining, by the user equipment, that the user equipment meets the motion trigger condition comprises:
determining, by the user equipment, that a change value of a preset parameter of the user equipment is greater than a preset threshold, wherein
the preset parameter comprises at least one of a location parameter of the user equipment, a motion parameter of the user equipment, or a received signal parameter of the user equipment.

3. The method according to claim 2, wherein the first message further comprises measurement manner indication information, the measurement manner indication information is used to indicate a measurement manner of the preset parameter, and the measurement manner comprises one or more of sensor measurement, satellite measurement, or signal receiving apparatus measurement; and
the method further comprises:
obtaining, by the user equipment, the preset parameter through measurement in the measurement manner.

4. The method according to any one of claims 1 to 3, wherein when the user equipment meets the motion trigger condition, the user equipment is in an idle state or an inactive state.

5. The method according to claim 4, wherein the reporting, by the user equipment, the measurement result of the positioning reference signal comprises:
reporting, by the user equipment in the idle state or the inactive state, the measurement result of the positioning reference signal to a location management device.

6. The method according to claim 4, wherein before the reporting, by the user equipment, the measurement result of the positioning reference signal, the method further comprises:
entering, by the user equipment, a connected state from the idle state or the inactive state; and
the reporting, by the user equipment, the measurement result of the positioning reference signal comprises:
reporting, by the user equipment in the connected state, the measurement result of the positioning reference signal to a location management device.

7. The method according to claim 1 or 2, wherein the user equipment is always in a connected state; and
the reporting, by the user equipment, the measurement result of the positioning reference signal comprises:
reporting, by the user equipment in the connected state, the measurement result of the positioning reference signal to a location management device.

8. The method according to any one of claims 1 to 7, wherein the first message further comprises measurement periodicity indication information, and the measurement periodicity indication information is used to indicate a measurement periodicity of the preset parameter; and
the method further comprises:
obtaining, by the user equipment, the preset parameter through measurement based on the measurement periodicity.

9. The method according to any one of claims 1 to 8, wherein
the measurement result of the positioning reference signal comprises a measurement result of a positioning reference signal that is obtained after the user equipment meets the motion trigger condition.

10. The method according to claim 9, wherein the measurement result of the positioning reference signal further comprises a measurement result of a positioning reference signal that is obtained before the user equipment meets the motion trigger condition.

11. The method according to any one of claims 1 to 10, wherein the measurement result of the positioning reference signal comprises one or more of the following information: reference signal received power RSRP, reference signal received quality RSRQ, a reference signal time difference RSTD, narrowband reference signal received power NRSRP, or narrowband reference signal received quality NRSRQ.

12. The method according to any one of claims 1 to 11, wherein the location management device comprises a location management network element LMF or a location management component LMC.

13. The method according to any one of claims 1 to 12, wherein before the receiving, by user equipment, a first message, the method further comprises:
sending, by the user equipment, capability information of the user equipment to the location management device; and
receiving, by the user equipment, assistance information from the location management device, wherein
the capability information of the user equipment is used to indicate at least a locating mode type supported by the user equipment and/or a positioning reference signal measurement capability.

14. A user equipment location information reporting method, wherein the method comprises:
sending, by a location management device, a first message to user equipment, wherein the first message comprises a motion trigger condition, and the motion trigger condition is used to trigger the user equipment to report a measurement result of a positioning reference signal based on motion; and
receiving, by the location management device, the measurement result of the positioning reference signal from the user equipment, wherein
the user equipment reports the measurement result of the positioning reference signal to the location management device when determining that the motion trigger condition is met.

15. The method according to claim 14, wherein the motion trigger condition comprises that a change value of a preset parameter of the user equipment is greater than a preset threshold; and
the preset parameter comprises at least one of a location parameter of the user equipment, a motion parameter of the user equipment, or a received signal parameter of the user equipment.

16. The method according to claim 14 or 15, wherein the first message further comprises measurement manner indication information, the measurement manner indication information is used to indicate a measurement manner of the preset parameter, and the measurement manner comprises one or more of sensor measurement, satellite measurement, or signal receiving apparatus measurement.

17. The method according to any one of claims 14 to 16, wherein the first message further comprises measurement periodicity indication information, and the measurement periodicity indication information is used to indicate a measurement periodicity of the preset parameter.

18. The method according to any one of claims 14 to 17, wherein the location management device comprises either a location management network element LMF or a location management component LMC.

19. The method according to any one of claims 14 to 18, wherein before the sending, by a location management device, a first message to user equipment, the method further comprises:
receiving, by the location management device, a location service request from an access and mobility management device, wherein the location service request is used to request to locate the user equipment; and
after the receiving, by the location management device, the measurement result of the positioning reference signal from the user equipment, the method further comprises:
sending, by the location management device, a location service response to the access and mobility management device, wherein the location service response comprises a result of locating the user equipment by the location management device.

20. The method according to any one of claims 14 to 19, wherein the location management device autonomously sends the first message to the user equipment.

21. The method according to any one of claims 14 to 20, wherein before the sending, by a location management device, a first message to user equipment, the method further comprises:
receiving, by the location management device, capability information of the user equipment from the user equipment; and
sending, by the location management device, assistance information to the user equipment, wherein
the capability information of the user equipment is used to indicate at least a locating mode type supported by the user equipment and/or a positioning reference signal measurement capability.

22. User equipment, wherein the user equipment comprises:
a receiving unit, configured to receive a first message, wherein the first message comprises a motion trigger condition, and the motion trigger condition is used to trigger the user equipment to report a measurement result of a positioning reference signal based on motion;
an analysis unit, configured to determine that the user equipment meets the motion trigger condition; and
a sending unit, configured to report the measurement result of the positioning reference signal.

23. The user equipment according to claim 22, wherein the user equipment further comprises:
a measurement unit, configured to obtain a preset parameter through measurement based on a measurement periodicity.

24. The user equipment according to claim 23, wherein the measurement unit is further configured to measure a plurality of positioning reference signals to obtain a measurement result of the positioning reference signals.

25. The user equipment according to any one of claims 22 to 24, wherein the receiving unit, the analysis unit, the sending unit, and the measurement unit are further configured to implement the user equipment location information reporting method according to any one of claims 2 to 13.

26. A location management device, wherein the location management device comprises:
a sending unit, configured to send a first message to user equipment, wherein the first message comprises a motion trigger condition, and the motion trigger condition is used to trigger the user equipment to report a measurement result of a positioning reference signal based on motion; and
a receiving unit, configured to receive the measurement result of the positioning reference signal from the user equipment, wherein
the user equipment reports the measurement result of the positioning reference signal to the location management device when determining that the motion trigger condition is met.

27. The location management device according to claim 26, wherein the sending unit and the receiving unit are further configured to implement the user equipment location information reporting method according to any one of claims 15 to 21.

28. User equipment, wherein the user equipment comprises:
a memory, configured to store computer program code, wherein the computer program code comprises instructions;
a radio frequency circuit, configured to send and receive a wireless signal; and
a processor, configured to execute the instructions, so that the user equipment performs the user equipment location information reporting method according to any one of claims 1 to 13.

29. A location management device, wherein the location management device comprises:
a memory, configured to store computer program code, wherein the computer program code comprises instructions;
a radio frequency circuit, configured to send and receive a wireless signal; and
a processor, configured to execute the instructions, so that the location management device performs the user equipment location information reporting method according to any one of claims 14 to 21.

30. A communication system, wherein the communication system comprises any plurality of network elements according to any one of claims 22 to 27.

31. A computer-readable storage medium, wherein the computer-readable storage medium stores computer-executable instructions, and when the computer-executable instructions are executed by a processing circuit, the user equipment location information reporting method according to any one of claims 1 to 13 or claims 14 to 21 is implemented.

32. A chip system, wherein the chip system comprises a processing circuit and a storage medium, the storage medium stores instructions, and when the instructions are executed by the processing circuit, the user equipment location information reporting method according to any one of claims 1 to 13 or claims 14 to 21 is implemented.

33. A computer program product, wherein the computer program product comprises program instructions, and when the program instructions are executed, the user equipment location information reporting method according to any one of claims 1 to 13 or claims 14 to 21 is implemented.
